Europäisches Patentamt

European Patent Office

Office européen des brevets

(19)

(11) Veröffentlichungsnummer: **0 024 716**
**A1**

(12) **EUROPÄISCHE PATENTANMELDUNG**

(21) Anmeldenummer: **80105029.5**

(22) Anmeldetag: **25.08.80**

(51) Int. Cl.³: **A 21 C 11/16**
**A 21 C 3/02, A 23 G 3/20**

(30) Priorität: **23.08.79 DE 2934077**

(43) Veröffentlichungstag der Anmeldung:
**11.03.81 Patentblatt 81/10**

(84) Benannte Vertragsstaaten:
**BE FR IT**

(71) Anmelder: **Hebenstreit GmbH**
**Hessenring 16**
**D-6082 Mörfelden(DE)**

(72) Erfinder: **Friedemann, Wähner**
**Nelkenweg 18**
**D-6057 Dietzenbach(DE)**

(74) Vertreter: **Kantner, Hans-Joachim, Dipl.-Ing.**
**Darmstädter Strasse 8**
**D-6070 Langen(DE)**

(54) Verfahren und Vorrichtung zur Herstellung von blockförmigen Nahrungsmittelprodukten.

(57) Zur einfachen und wirtschaftlichen sowie zuverlässigen und betriebsstörungsfreien Herstellung von blockförmigen Nahrungsmittelprodukten aus mindestens zwei Lagen extrudierter und anschließend expandierter pflanzlicher Stärke mit zwischen- und/oder aufliegendem Füllschichtauftrag und/oder mit Außenumkleidung durch eine Hüllschicht bei gleichmäßigem Verbrauch an insbesondere Füllschichtmaterial und befriedigender Qualität sowohl bezüglich der geschacklichen, nahrungswissenschaftlichen und verpackungstechnischen Eigenschaften und insbesondere auch eines entsprechenden äußeren Eindruckes sieht die Erfindung ein Verfahren und eine Vorrichtung vor, bei welchem bzw. welcher der Extrusionsteig für alle Blocklagen gleichzeitig durch denselben Extruderauslaß einer Extrusionseinrichtung extrudiert und anschließend kontinuierlich expandiert wird, wobei er während des Extrusionsvorganges oder während des Expansionsvorganges in eine der gewünschten Lagenzahl entsprechende Zahl von kontinuierlichen bandförmigen Strängen aufgeteilt wird und zumindest der bzw. die im fertigen blockförmigen Nahrungsmittelprodukt nicht als Decklagenmaterial bestimmte(n) Strang bzw. Stränge jeweils einzeln kontinuierlich mit einem Füllschichtauftrag versehen und übereinandergeschichtet wird bzw. werden.

*FIG. 2a*

PATENTANWALT DIPL.-ING. H.-J. KANTNER
DARMSTÄDTER STR.8. 607 LANGEN/HESSEN

6070 LANGEN,  18. JULI 1979
DARMSTÄDTER STRASSE 8   Ktr./n.
TELEPHON: (06103) 2 30 29
TELEGRAMM: KANTNERPATENTE
                LANGENHESSEN

Neue Telegrammanschrift 1   IDEALAW
New telegram address 1

Hebenstreit GmbH
6000 Frankfurt/Main-Niederrad


Verfahren und Vorrichtung zur Herstellung von blockförmigen
Nahrungsmittelprodukten

===============================================================


Die Erfindung bezieht sich gemäß einem ersten übergeordneten
Erfindungsgedanken auf ein Verfahren zur Herstellung von
blockförmigen Nahrungsmittelprodukten aus mindestens zwei
Lagen aus extrudierter und anschließend expandierter pflanzlicher Stärke mit zwischen- und/oder aufliegendem Füllschichtauftrag und/oder mit Außenumkleidung durch eine Hüllschicht vorzugsweise aus Schokolade, Nougat oder dergleichen,
und hat gemäß einem zweiten übergeordneten Erfindungsgedanken eine Vorrichtung zur Herstellung solcher Nahrungsmittelprodukte zum Gegenstand, die sich insbesondere zur Durchführung des Verfahrens gemäß dem ersten übergeordneten Erfindungsgedanken eignet.


Es ist bereits bekannt, plattenförmige Nahrungsmittelprodukte durch Durchsatz eines im wesentlichen pflanzliche Stärke
enthaltenden Teiges durch einen Extruder mit schlitzförmigem

Extrusionsauslaß und anschließendes Expandieren des Extrusionsstranges herzustellen. Das Ergebnis ist ein Expansionsstrangmaterial, das einen nur wenig einem langgezogenen Rechteck ähnelnden Querschnitt aufweist, weil dessen Schmalseiten praktisch kaum ausgeprägt sind, vielmehr in praktisch nicht zu kontrollierender Weise Rundungen mit mehr oder weniger stark gezackter Randkontur aufweisen, und weil ferner dessen Längsseiten Materialausbauchungen nach außen aufweisen, welche diesen Querschnitt des Expansionsstranges noch weiter von der Form eines langgezogenen Rechteckes entfernen. Hinzu kommt weiterhin, daß der Expansionsstrang in sich eine gewisse Verwerfung und Verdrillung aufweist, so daß auch aus diesem Grunde nicht zu erwarten ist, daß zwei an beliebiger Stelle aus dem Expansionsstrang herausgeschnittene etwa plattenförmige Stücke, und seien es sogar benachbarte Stücke, beim Aufeinanderliegen eine zueinander plane und parallele Lage einzunehmen vermögen. Dieses bekannte Nahrungsmittelprodukt wird daher auch lediglich als leichtes einlagiges Naschwerk, das als sogenannte Snacks bekannt ist, verwandt.

Nahrungsmittelprodukte aus mindestens zwei Lagen aus extrudierter und anschließend expandierter pflanzlicher Stärke mit zwischen- und/oder aufliegendem Füllschichtauftrag sind bisher nicht bekannt, vielmehr ist der Erfindung erstmals die neuartige und erfinderische übergeordnete Aufgabe gestellt, solche Nahrungsmittelprodukte in einfacher und wirtschaftlicher Weise mit gleichmäßigem Verbrauch an insbesondere Füllschichtmaterial und befriedigender Qualität sowohl bezüglich der geschmacklichen, ernährungswissenschaftlichen und verpackungstechnischen Qualitäten sowie insbesondere auch eines ansprechenden äußeren Eindruckes zuverlässig und betriebstörungsfrei herzustellen. Solche Nahrungsmittelprodukte geben nämlich nicht nur die Möglichkeit vom ernährungsphysiologischen Standpunkt, möglichst kalorienarmes Naschwerk zu erzeugen, welches für
die allgemeine Steigerung der Volksgesundheit von Vorteil ist, sondern eröffnen sogar die Möglichkeit für
die Nutzung bisher von den allgemeinen Ernährungsgewohnheiten abgelehnter, aus volkswirtschaftlicher ebenso wie aus ernährungswissenschaftlicher Sicht wertvolle
Nahrungsmittel, die aus bisher vom Markt nicht akzeptierten Ausgangsmaterialien hergestellt sind. Ein Beispiel für diese letztgenannten Nahrungsmittelprodukte
ist beispielsweise aus aufbereitetem Algenmaterial ernährungsphysiologisch wertvollster Zusammensetzung hergestelltes knäckebrotartiges Plattenmaterial, das jedoch
als solches trotz seiner anerkannt hervorragenden Eigenschaften aufgrund geschmacklicher Eigenheiten und/oder
Vorurteilen in der Käuferschaft auf dem Markt bisher
nicht den für die Steigerung der Volksgesundheit erwünschten Erfolg zeigte. Hier könnte durch die Erfindung
Abhilfe geschaffen werden, wenn die dieser zugrundeliegende Aufgabe gelöst werden kann, in der beschriebenen
Weise ein blockförmiges Nahrungsmittel aus mehreren Lagen
solchen plattenförmigen Materials zu schaffen, zwischen
denen sich Füllschichtaufträge geschmacklich interessanter Ausgestaltung, wie beispielsweise bestimmte Käsecremes,
Frucht- oder Kräutercremes auf der Basis beispielsweise von
Mayonnaise oder dergleichen befinden. Andererseits ist die
Erfindung nicht ausschließlich auf die Herstellung gerade
solcher blockförmiger Nahrungsmittelprodukte ausgelegt,
vielmehr können mit ihr auch neuartige Nahrungsmittelprodukte der beschriebenen Art hergestellt werden, bei denen
die einzelnen Lagen aus anderen pflanzliche Stärke enthaltenden Materialien, wie beispielsweise auf der Basis von Getreidegrieß, bestehen. Diese Materialien eignen sich nämlich gleich gut für die Erstellung von blockförmigen Nahrungsmittelprodukten mit zwischen den einzelnen Lagen angeordneten Füllschichten sowohl aus herzhaften Geschmack
aufweisenden Cremes, wie beispielsweise Käsecreme, Kräuter-oder Fruchtcremes auf der Bais von Mayonnaise oder Remoulade oder dergleichen, als auch aus süßen Materialien, wie
beispielsweise Schokolade, Nougat, Marmelade, Konfitüren
oder Fruchtschaummassen oder dergleichen, sofern es nur
gelingt, die einzelnen Trägerlagen für diese Füllschichten
in der beschriebenen Weise so herzustellen, daß sie wirtschaftlich und damit nicht nur gleichmäßig, sondern auch
kontinuierlich mit Füllschichtauftrag versehen werden können, ohne daß es zu Bruch beim Durchlauf durch eine Füllschichtauftragseinrichtung und damit zu Beschmutzungen der
Produktionsanlage und Störungen von deren kontinuierlichem
Betrieb kommt.

Dies ist mit den bekannten plattenförmigen Extrusions- und
Expansionsprodukten nicht möglich, weil diese sich für eine Füllschichtbeschichtungsbehandlung aufgrund ihrer unregelmäßigen Querschnittsform ebenso wie wegen ihrer mangelhaften Planheit hierfür nicht eignen und aus dem letzteren
Grunde besonders bruchgefährdet sind. Wirtschaftlicher
Herstellung solcher erfindungsgemäßer blockförmiger Nahrungsmittelprodukte steht aber auch noch ein anderer Umstand hinderlich entgegen:

Für eine rationelle Fertigung solcher Nahrungsmittelprodukte erscheint es in der Fachwelt unerläßlich, daß das
Lagenmaterial nicht nur für rationellen und zufriedenstellende Eigenschaften aufweisenden Füllschichtauftrag geeignet sein muß, sondern seinerseits auch entsprechend rationell hergestellt werden können muß. Hierfür wird es als
unerläßlich erachtet, daß das Material für unterschiedliche Lagen auch durch für jede Lage eigens vorgenommene Extrusion mit anschließender Expansion hergestellt wird. Hier
jedoch hat die Erfahrung gezeigt, daß entgegen der Meinung
der Fachwelt mit einer verfahrensmäßigen Parallelschaltung
mehrerer örtlich beispielsweise hintereinander angeordneter Extruder mit jeweils nachgeschalteter Expansionseinrichtung abgesehen von dem nicht überall zu befriedigenden hohen Platzbedarf und dem unerwünscht hohen Kapitalaufwand für diese der für eine befriedigende Führung dieses Herstellungsverfahrens unerläßliche Gleichlauf aller
dieser Extruder mit jeweils nachgeschalteter Expansionseinrichtung praktisch nicht zu erreichen ist. Interne
Versuche haben nämlich erbracht, daß aus den einzelnen
Expansionseinrichtungen die Expansionsstränge praktisch
nicht mit gleichbleibender Ausstoßgeschwindigkeit abgegeben werden, diese vielmehr Schwankungen unterliegt,
welche für den Anfall unterschiedlicher Stranglängen aus
unterschiedlichen Extrusions- und Expansionseinheiten in
der gleichen Zeiteinheit verantwortlich sind. Dies bedingt, daß der benötigte Gleichlauf nicht möglich ist.
Die Ursache für diese Schwankungen der Ausstoßgeschwindigkeit der Expansionsstränge sind bisher noch nicht bekannt. Diese Geschwindigkeitsschwankungen sind für die
Herstellung eines einlagigen Nahrungsmittelproduktes aus
extrudiertem und anschließend expandiertem Material ohne
Belang, stellen für die Herstellung von mehrlagigem
Blockmaterial jedoch ein bisher für unüberwindlich gehaltenes Hindernis dar.

Die Erfindung hat daher zum Ziel, mit einfachen und kostengünstigen Mitteln eine Möglichkeit zu schaffen, trotz der
aufgezeigten Schwierigkeiten ein neuartiges blockförmiges
Nahrungsmittelprodukt aus mindestens zwei Lagen aus extrudierter und anschließend expandierter pflanzlicher Stärke
mit zwischen- und/oder aufliegendem Füllschichtauftrag und/
oder mit Außenumkleidung durch eine Hüllschicht beliebiger
Ausbildung in sowohl bezüglich der Anschaffungskosten als
auch bezüglich der Verfahrensführungskosten höchst wirtschaftlicher Weise nicht nur rationell, sondern auch kontinuierlich zuverlässig betriebsstörungsfrei herstellen zu können, das jegliche Anforderung an Gleichmäßigkeit
der geometrischen Ausbildung, die insbesondere im Hinblick auf spätere Verpackung von großer Bedeutung ist,
und der Füllschichtbeschichtung, welche für die Optimierung des Gestehungspreises dieses Nahrungsmittelproduktes von Wichtigkeit ist, sowie des ästhetisch
schönen äußeren Erscheinungsbildes dieses Nahrungsmittelproduktes, das für dessen Marktgängigkeit wesentlich mitbestimmend ist, erfüllt, wobei sich zusätzlich
auch noch Einsparungen an Maschinen- und Energieaufwand ergeben sollen.

Die Erfindung erreicht dies in überraschend einfacher
Weise gemäß ihrem auf ein Verfahren zur Herstellung
von blockförmigen Nahrungsmittelprodukten aus mindestens
zwei Lagen aus extrudierter und anschließend expandierter
pflanzlicher Stärke mit zwischen- und/oder aufliegendem
Füllschichtauftrag und/oder mit Außenumkleidung durch
eine Hüllschicht vorzugsweise aus Schokolade, Nougat
oder dergleichen gerichteten ersten übergeordneten Erfindungsgedanken dadurch, daß der Extrusionsteig für
alle Blocklagen gleichzeitig durch denselben Extruderauslaß extrudiert und anschließend kontinuierlich expandiert wird, wobei er während des Extrusionsvorganges oder während des Expansionsvorganges in eine der
gewünschten Lagenzahl entsprechende Zahl von kontinuierlichen bandförmigen Strängen aufgeteilt wird, und
daß zumindest der bzw. die im fertigen blockförmigen
Nahrungsmittelprodukt nicht als Decklagenmaterial bestimmte(n) Strang bzw. Stränge jeweils einzeln kontinuierlich mit einem Füllschichtauftrag versehen und
übereinandergeschichtet werden, während sich gemäß
ihrem zweiten übergeordneten Erfindungsgedanken eine
Vorrichtung zur Herstellung von blockförmigen Nahrungsmittelprodukten aus mindestens zwei Lagen aus extrudierter und anschließend expandierter pflanzlicher Stärke
mit zwischen- und/oder aufliegendem Füllschichtauftrag
und/oder mit Außenumkleidung durch eine Hüllschicht
vorzugsweise aus Schokolade, Nougat oder dergleichen,
die sich insbesondere zur Durchführung des Verfahrens
nach dem ersten übergeordneten Erfindungsgedanken eignet, durch eine den Extrusionsteig für alle Blocklagen
gleichzeitig durch denselben Extruderauslaß kontinuierlich ausfördernde Extrusionseinrichtung mit dieser nachgeschaltetem Expansionsraum und der Extrusionseinrichtung oder dem Expansionsraum zugeordneter Einrichtung
zur Aufteilung des Extrusionsteiges in eine der gewünschten Lagenzahl entsprechende Zahl von kontinuierlichen
bandförmigen Strängen und durch eine der Zahl der mit
Füllschichtauftrag zu versehenden Lagen entsprechende
Vielzahl von dem Expansionsraum nachgeschalteten Füllschichtauftrageinrichtungen sowie durch eine Schichteinrichtung für die Übereinanderschichtung der einzelnen
Blocklagen kennzeichnet.

Es ist erkennbar, daß die Erfindung keineswegs den Weg
geht, die Ursache für die Pulsation der Ausstoßgeschwindigkeiten der Expansionsstränge zu beseitigen, sondern
in erfindungsspezifischer Weise diesen der Kombination
von Extrusion und nachfolgender Expansion des genannten
Materials für den Extrusionsteig eigenen unregelmäßigen
Defekt beibehält, ihn aber für die Zwecke der Erfindung
nutzbar macht, indem sie dessen nachteilige Wirkungen
erfindungsgemäß ausschaltet. Hierfür bewirkt sie eine
möglichst weitgehende zeitliche Koinzidenz dieser Defekte der Extrusions-Expansions-Herstellung der einzelnen für die einzelnen Blocklagen bestimmten Stränge bei
gleichzeitiger möglichst weitgehender Gleichheit der
einzelnen Geschwindigkeitsamplituden untereinander. Hierfür sieht die Erfindung vor, daß das Material für sämtliche einzelnen Lagenstränge gleichzeitig aus dem gleichen
Extruderauslaß ausgebracht und gleichzeitig expandiert
werden. Hierdurch wird praktisch dreierlei bewirkt: Einmal sind in allen expandierten Einzelsträngen die praktisch unvermeidbaren Geschwindigkeitspulsationen praktisch zeitgleich. Weiterhin ist die Amplitude dieser Geschwindigkeitspulsationen von Einzelstrang zu Einzelstrang gleichfalls praktisch gleich. Und schließlich
sind auch örtliche Zuordnungsunterschiede von Einzelstrang zu Einzelstrang dadurch vermieden, daß nicht nur
einzelne Bereiche unterschiedlicher Expansionsstränge zu
gleicher Zeit fertiggestellt werden, sondern diese auch
praktisch gleichzeitig für gleichartige spätere Weiterbehandlung zur Verfügung stehen. Hierdurch werden nicht
nur Schlaufenbildungen im einen oder anderen Expansionsstrang auf seinem Weg zur Weiterbehandlung bzw. Verkürzungen des einen oder anderen Expansionsstranges gegenüber dem ihm benachbarten einen oder anderen Expansionsstrang vermieden, sondern in vorteilhafter Weise auch
bewirkt, daß irgendwelche etwa nicht vermeidbaren Ungenauigkeiten in der Querschnittsform oder der Planheit der
Expansionsstränge später im Bereich der Schichtstation,
in welcher die einzelnen Stränge lagenförmig oder stückförmig übereinandergeschichtet werden, dadurch ausgeglichen werden, daß stets Strangbereiche geometrisch gleichen Defektes übereinander zu liegen kommen. Hierdurch
wird nicht nur die Bruchgefahr während des gesamten Herstellungs- bzw. Behandlungsverfahrens erheblich reduziert, sondern darüber hinaus auch die Möglichkeit für
problemlose Kalibrierung auf gewünschtes Dickenmaß und
damit für ein hervorragendes ästhetisches Erscheinungsbild des Endproduktes bei gleichzeitiger Vereinfachung
und Rationalisierung einer etwaigen sich anschließenden
Verpackung geschaffen.

In weiterer erfinderischer Fortbildung kann diesen allgemeinen Erfindungsgedanken zweckmäßig fortführend vorgesehen sein, daß der Extrusionsteig durch eine Extrusionsdüse mit mehreren etwa rechteckförmigen Extrusionsöffnungen
von der gewünschten Querschnittsform der bandförmigen Stränge ähnlicher Form extrudiert wird und daß die Extrusionsstränge einzeln expandiert und da nach mit sich etwa fächerförmig
vergrößerndem Abstand auseinandergeleitet werden. Hierfür
kann vorrichtungsmäßig die Extrusionseinrichtung eine Extrusionsdüse mit mehreren etwa rechteckförmigen Extrusionsöffnungen von der gewünschten Querschnittsform der bandförmigen Stränge ähnlicher Form und der Expansionsraum eine
der Zahl der Stränge entsprechende Zahl von Expansionskammern aufweisen, in denen jeder Extrusionsstrang unabhängig
vom anderen expandierbar ist, wobei eine Verzweigungsfördereinrichtung vorgesehen ist, mittels derer die Extrusionsstränge nach ihrer Expansion mit sich etwa fächerförmig vergrößerndem Abstand auseinanderleitbar sind. In weiterer zweckmäßiger Ausgestaltung kann dabei die Extrusionsdüse der Extrusionseinrichtung ausgangsseitig durch eine
Lochplatte mit einer der gewünschten Strangzahl entsprechenden Zahl von schlitzförmigen Austrittsöffnungen für
den Extrusionsteig mit jeweils etwa rechteckförmiger Querschnittskontur verschlossen sein.

Gemäß einem hierzu alternativen untergeordneten Erfindungsgedanken kann aber auch der Extrusionsteig durch eine Extrusionsdüse mit einer etwa rechteckförmigen Extrusionsöffnung von der Summe der gewünschten Querschnittsformen
der bandförmigen Stränge ähnlicher Form extrudiert und
danach der Extrusionsstrang in die gewünschte Strangzahl
aufgeteilt werden. Hierfür sieht die Erfindung vorrichtungsseitig vor, daß die Extrusionseinrichtung eine Extrusionsdüse mit einer etwa rechteckförmigen Extrusionsöffnung von
der Summe der gewünschten Querschnittsformen der bandförmigen Stränge ähnlicher Form aufweist und daß dieser
Extrusionsöffnung eine Einrichtung zur Aufteilung des
Extrusionsstranges in eine der gewünschten Lagenzahl
entsprechende Strangzahl nachgeschaltet ist. In weiterer zweckmäßiger Ausgestaltung dieses untergeordneten
Erfindungsgedankens kann der Extrusionsstrang vor seiner Aufteilung in einzelne bandförmige Stränge als
Ganzes expandiert werden, wobei die durch nach der Expansion erfolgte Aufteilung gewonnenen Stränge mit sich
etwa fächerförmig vergrößerndem Abstand auseinandergeleitet werden. Vorrichtungsmäßig ist hierfür vorgesehen, daß der Extrusionsdüse eine Expansionskammer für
die Expansion des aus dieser extrudierten bandförmigen
Stranges als Ganzes nachgeschaltet ist und daß eine
Verzweigungsfördereinrichtung vorgesehen ist, mittels
derer die durch die Aufteilung dieses als Ganzes expandierten bandförmigen Stranges durch die Aufteilungseinrichtung gewonnenen Teilstränge mit sich etwa fächerförmig vergrößerndem Abstand auseinanderleitbar sind.

Eine vorteilhafte Alternativlösung hierzu besteht darin,
daß der Extrusionsstrang vor dem Expandieren in einzelne
Teilstränge aufgeteilt wird und daß diese jeweils einzeln expandiert und danach mit sich etwa fächerförmig
vergrößerndem Abstand auseinandergeleitet werden, wofür bei der Vorrichtung nach der Erfindung der Extrusionsdüse eine Einrichtung zur Aufteilung des Extrusionsstranges in eine der gewünschten Lagenzahl entsprechende
Strangzahl sowie eine dieser Strangzahl entsprechende
Zahl von Expansionskammern nachgeschaltet ist, in denen
jeder Teilstrang unabhängig vom anderen expandierbar
ist, und eine Verzweigungsfördereinrichtung vorgesehen
ist, mittels derer die expandierten Teilstränge mit sich
etwa fächerförmig vergrößerndem Abstand auseinanderleitbar sind. Zweckmäßig kann dabei die Extrusionsdüse der Extrusionseinrichtung durch ein Übergangsstück mit den einzelnen Expansionskammern verbunden sein, in welchem die Aufteilungseinrichtung angeordnet ist. Andererseits kann aber mit Vorteil auch vorgesehen sein, daß die einzelnen Expansionskammern mit der Extrusionsdüse der Extrusionseinrichtung unmittelbar verbunden sind, wobei die Aufteilungseinrichtung durch ein allen Expansionskammern gemeinsames Einlaufmundstück gebildet ist. Dabei kann mit Vorzug die Aufteilungseinrichtung messerklingen- oder drahtartige Schneidelemente aufweisen, die im übrigen bevorzugt feststehend im Vorschubweg des Extrusionsstranges angeordnet sind, so daß sich die Gesamtkonzeption und Konstruktion besonders einfach gestaltet, indem ein Oszillationsantrieb für die Schneidelemente vermieden ist und die Aufteilung des als Ganzes extrudierten Stranges in einzelne zu expandierende Teilstränge allein der Vorschubbewegung dieses Extrusionsstranges überlassen bleibt, deren Antriebsenergie in Form der freiwerdenden Extrusionsenergie ohnehin zur Verfügung steht.

Es trägt also diese erfinderische Weiterbildung sowohl des auf ein Verfahren als auch des auf eine Vorrichtung gerichteten untergeordneten Erfindungsgedankens mit ihren geschilderten spezifischen Ausgestaltungen nicht unwesentlich zur Verbesserung der erfindungsgemäßen Lösung der zugrundeliegenden Aufgabe bei, indem nämlich zusätzlich zu dem der Erfindung zugrundeliegenden übergeordneten Gedanken, die Extrusion und Expansion des benötigten Stranggutes für alle Einzelstränge möglichst weitgehend zeitlich und örtlich koordiniert vorzunehmen, so daß Pulsationen und Schwankungen zeitlich und örtlich möglichst weitgehend gleichzeitig auftreten und dadurch bedingte Fehlerquellen sich gegenseitig weitestmöglich aufheben, auch noch Einfluß auf die Querschnittsgestaltung des extrudiert-expandierten Strangmaterials an der am meisten bestimmenden Stelle, nämlich im Extrusions-
zeitpunkt, genommen wird. Hier hat nämlich die Erfindung
erkannt, daß es für die Formgebung des Expansionsstranges
wesentlich mitbestimmend ist, welchen Ursprungsquerschnitt
das Strangmaterial im Augenblick des Beginns seiner Expansion besitzt. Und dies wiederum wird grundsätzlich
durch den Extrusionsquerschnitt bestimmt. Dabei kommt es
aber - wie die Erfindung erstmalig erkannt hat - nicht etwa allein auf das Vorhandensein einer entsprechenden Formgebung der Extrusionsdüse bzw. der Extrusionsöffnung an,
sondern vielmehr gerade auf die Kombination dieser spezifischen Formgebung mit dem erfindungsspezifisch hierfür
vorgesehenen Ort der Anordnung dieses strangquerschnittsbestimmenden Elementes, nämlich für alle Einzel- bzw. Teilstränge gleichzeitig im Extruderauslaß. Dabei kann je nach
Konsistenz und teigspezifischen Eigenschaften des Extrusionsmaterials die Extrusion der einzelnen Teilstränge
durch eine Vielzahl gleichzeitig am Extrusionsvorgang teilnehmender Extrusionsöffnungen länglich-rechteckiger Ausgestaltung ihres lichten Querschnittes oder aber in Form eines dickeren Gesamtstranges erfolgen, der dann durch eine
Aufteilungseinrichtung mit messerklingen- oder drahtartigen Schneidelementen etwa streifenförmig aufgeteilt wird.
Ein sich dabei ergebender überraschender Effekt ist der,
daß es nicht etwa eines Geradeschälvorganges mit Abschälen unerwünschter Ausbauchungen im Bereich der Querschnittsseiten mit entsprechendem Abfall bedarf, wie bei bestimmten
Holzbearbeitungen, sondern daß bei entsprechender Abstimmung
des Extrusionsdüsenquerschnittes auf die Zusammensetzung und
physikalischen Eigenschaften des zu extrudierenden Materials
einerseits und die verschiedenen Verfahrensparameter, wie
beispielsweise Druck-, Temperatur und Extrusionsgeschwindigkeit andererseits eine einfache Aufteilung des Extrusionsstranges in einzelne Teilstränge völlig ausreichend
ist, um ein vorzügliches Ergebnis des zu expandierenden
Stranges im Hinblick auf seine Querschnittsausgestaltung
zu erhalten. In diesem Zusammenhang ist darauf hinzuweisen, daß durch den vorstehend mehrfach benutzten Ausdruck "etwa rechteckförmig" zum Ausdruck gebracht werden soll, daß das jeweilige die lichte Weite der Extrusionsöffnung bestimmende Rechteck keinesweg stets eine
gerade Randkontur aufzuweisen braucht, diese vielmehr
je nach Zusammensetzung und physikalischen Eigenschaften
des Extrusionsteiges und Verfahrensparametern des Extrusionsvorganges leicht konkav oder konvex gekrümmt sein
kann.

Der Lösung der gleichen der Erfindung zugrundeliegenden
Aufgabe ordnet sich ferner ein weiterer den übergeordneten Gedanken zweckmäßig fortbildender untergeordneter
Erfindunggedanke ein, gemäß dem der Extrusionsteig nach
der Extrusion formmäßig geführt expandiert wird, wofür
vorrichtungsseitig nach der Erfindung eine Einrichtung
zur formmäßigen Führung des Extrusionsstranges bzw. seiner Teilstränge währenddessen bzw. deren Expansion vorgesehen wird. Dabei kann mit Vorzug die Expansionsführungseinrichtung durch eine Lochplatte mit der Zahl der
Expansionskammern entsprechender Zahl von mit der bzw.
den Extrusionsdüse(n) kommunizierenden Einlauföffnungen gebildet sein, deren lichte Kontur in Expansionsrichtung sich erweiternd entsprechend der gewünschten
Querschnittsform des jeweiligen Expansionsstranges
ausgebildet ist.

Während zur Erzielung des in allen Blocklagen später erforderlichen gleichen Querschnittes des diese bildenden
Strangmaterials gemäß dem erstgeschilderten die Erfindung zweckmäßig fortbildenden untergeordneten Erfindungsgedanken, Eingriff auf das in den Expansionsvorgang eintretende Material genommen wurde, indem durch Vorgabe des Extrusionsquerschnittes der in den Expansionsvorgang eintretende Einzelstrang querschnittsmäßig bereits vorgeformt war, wird gemäß diesem untergeordneten Erfindungsgedanken nunmehr auch jeglicher Zufall hinsichtlich der Formgebung beim Expansionsvorgang möglichst weitgehend ausgeschaltet, indem dafür gesorgt wird, daß dieser Expansionsvorgang formmäßig geführt abläuft. Das bedeutet aber, daß der sich in der Expansion befindende Teilstrang sich jeweils unter der Wirkung der Expansion an die vorgegebene Expansionskammerkontur zwangsweise anlegen muß, wobei etwaige während des Expansionsvorganges auftretende Druck- oder Fließgeschwindigkeitsschwankungen sich lediglich in Vorschubrichtung des Stranges auswirken können, wo sie keinen nachteiligen Einfluß auf die Ausgestaltung des späteren Expansionsendproduktes haben können.

Das Ergebnis ist in jedem Fall eine Vielzahl von parallel zueinander angeförderten Expansionssträngen mit in bisher nicht für erreichbar gehaltenem Maße gleicher Querschnittsausgestaltung bester Annäherung an eingeradseitiges langgestrecktes Rechteck praktisch ohne Verdrehungen bzw. Verwerfungen ihrer Strangebene über der Stranglänge, wie diese als Ausgangsmaterial für die Bildung des erfindungsgemäßen blockförmigen Nahrungsmittelproduktes im Zuge der Aufbringung der einzelnen Füllschichtaufträge und der Übereinanderschichtung der einzelnen Lagen und einer sich etwa anschließenden Kalibrierung auf Dickenmaß optimal sind.

In weiterer zweckmäßiger Ausgestaltung der Erfindung können vor Aufbringung des Füllschichtauftrages die einzelnen bandförmigen Stränge geröstet werden, wofür dann eine der Expansionseinrichtung nachgeschaltete Rösteinrichtung für die einzelnen Expansionsstränge vorzusehen ist, in der diese in kontinuierlichem Durchlauf auf gewünschte
Endrösche bzw. Krossheit bringbar sind. Diese Rösteinrichtung kann bevorzugt mit Heißgas und/oder
Hochfrequenz und/oder Infrarotstrahlung als Energieträger beschickt sein.

Als für die Erzielung eines optimalen Endproduktes in Form
des erfindungsgemäßen blockförmigen Nahrungsmittelproduktes weiterhin zweckdienlich hat es sich erwiesen, wenn die
einzelnen bandförmigen Stränge jeweils in etwa plattenförmige Stücke von der gewünschten Blocklänge entsprechender
Länge aufgeteilt und die mit Füllschichtauftrag zu versehenden Stränge als Folge kontinuierlich aneinanderstoßender
Stücke der nachfolgenden Füllschichtbeschichtung zugeführt
und nach dieser im Folgeabstand zueinander vergrößert und
zusammen mit einem entsprechenden Stück eines etwaigen
nicht mit Füllschichtauftrag versehenen Stranges stückweise übereinandergeschichtet werden. Hierfür wird die Vorrichtung nach der Erfindung so ausgestaltet, daß jedem
Förderweg der einzelnen Expansionsstränge eine Querschneideinrichtung zugeordnet ist, mittels derer dieser Strang
in etwa plattenförmige Stücke von der gewünschten Blocklänge entsprechender Länge aufteilbar ist, und daß jeder
solchen Querschneideinrichtung eine Fördereinrichtung
nachgeschaltet ist, mittels derer diese etwa plattenförmigen Stücke der mit Füllschichtauftrag zu versehenden
Stränge in kontinuierlich aneinanderstoßender Folge einer
zugeordneten Füllschichtauftragseinrichtung zuführbar
sind, welcher jeweils ein Vereinzelungsförderer nachgeschaltet ist, mittels dessen die mit Füllschichtauftrag
versehenen Stücke vereinzelt einer Schichteinrichtung zuführbar sind, in welcher sie in gewünschter Folge übereinanderschichtbar und mit einem entsprechenden Stück eines
etwaigen nicht mit Füllschichtauftrag versehenen Stranges
abdeckbar sind.

Eine Alternativmöglichkeit hierzu liegt darin, daß die einzelnen mit Füllschichtauftrag zu versehenden Stränge der Füllschichtbeschichtung unzerteilt zugeführt und nach dieser ebenso wie ein etwaiger nicht mit Füllschichtauftrag versehener Strang jeweils in einzelne etwa plattenförmige Stücke von der gewünschten Blocklänge entsprechender Länge aufgeteilt und im Folgeabstand zueinander vergrößert und stückweise übereinandergeschichtet werden. Hierfür wird dann die Vorrichtung nach der Erfindung so ausgestaltet, daß jedem Förderweg der einzelnen Expansionsstränge eine Füllschichtauftragseinrichtung zugeordnet ist, mittels welcher auf den betreffenden Expansionsstrang während dessen kontinuierlichen Durchlaufs der gewünschte Füllschichtauftrag aufbringbar ist, und daß dieser Füllschichtauftragseinrichtung jeweils nachgeschaltet ebenso wie an beliebiger Stelle des Förderweges eines etwaigen nicht mit Füllschichtauftrag versehenen Stranges jeweils eine Querschneideinrichtung, mittels derer der jeweilige Strang in etwa plattenförmige Stücke von der gewünschten Blocklänge entsprechender Länge aufteilbar ist, und ein Vereinzelungsförderer vorgesehen ist, mittels dessen die mit Füllschichtauftrag versehenen Stücke vereinzelt einer Schichteinrichtung zuführbar sind, in welcher sie in gewünschter Folge übereinanderschichtbar und mit einem entsprechenden Stück eines etwaigen nicht mit Füllschichtauftrag versehenen Stranges abdeckbar sind.

Eine wiederum alternative Möglichkeit der Verfahrensführung kennzeichnet sich dadurch, daß die einzelnen mit Füllschichtauftrag zu versehenden Stränge der Füllschichtbeschichtung unzerteilt zugeführt und nach dieser zusammen mit einem etwaigen nicht mit Füllschichtauftrag versehenen Strang bandförmig kontinuierlich übereinandergeschichtet werden und daß der so gebildete Mehrlagenstrang danach in einzelne blockförmige Stücke von
der gewünschten Blocklänge entsprechender Länge aufgeteilt wird. Hierfür wird die Vorrichtung nach der Erfindung so ausgebildet, daß jedem Förderweg der einzelnen Expansionsstränge eine Füllschichtauftragseinrichtung zugeordnet ist, mittels welcher auf den betreffenden Expansionsstrang währeddessen kontinuierlichen Durchlaufs der gewünschte Füllschichtauftrag
aufbringbar ist, und daß dieser Füllschichtauftragseinrichtung jeweils nachgeschaltet eine Fördereinrichtung vorgesehen ist, mittels derer dieser mit Füllschichtauftrag versehene Strang einer Schichteinrichtung zuführbar ist, mittels welcher die einzelnen in
gleicher Weise zugeführten mit Füllschichtauftrag versehenen Stränge bandförmig kontinuierlich übereinanderschichtbar und mit einem etwaigen gleichfalls als kontinuierliches Band zugeführten nicht mit Füllschichtauftrag versehenen Strang ebenfalls bandförmig kontinuierlich abdeckbar sind, und daß dieser Schichteinrichtung eine Querschneideinrichtung nachgeschaltet
ist, mittels welcher der in der Schichteinrichtung gebildete Mehrlagenstrang in einzelne blockförmige Stücke
von der gewünschten Blocklänge entsprechender Länge
aufteilbar ist.

Die Wahl zwischen diesen einzelnen Erfindungsvarianten
ist vom Fachmann wiederum in Abhängigkeit einerseits der
Eigenschaften des für die Blocklagen bestimmten Einzelstrangmaterials und andererseits der jeweiligen Konsistenz in bezug auf beispielsweise Gewicht, Klumpigkeit,
Zähflüssigkeit, Standfestigkeit und dergleichen sowie
Schichtdicke des bzw. der jeweiligen Füllschicht-Auftrages bzw. Aufträge zu wählen. Hervorzuheben ist jedoch,
daß die letztgenannte Variante, welche mit kontinuirlich
durchlaufender Beschichtung unzerteilten bandförmigen Strangmaterials mit Füllschichtauftrag und sich anschließender bandförmiger Übereinanderschichtung der füllschichtbeschichteten Stränge und Zerteilung des so gebildeten Mehrlagenblockmaterials in einer sich anschließenden Querschneideinrichtung den Vorteil besonders geringen maschinellen und energiemäßigen Aufwandes besitzt und sich daher
besonders empfiehlt, sofern ihren Einsatz die zu behandelnden Ausgangsmaterialien zulassen.

Bei den mit stückweiser Übereinanderschichtung der einzelnen füllschichtbeschichteten Stränge arbeitenden beiden
Varianten der Erfindung kann es sich empfehlen, wenn in
zweckmäßiger Ausgestaltung der Erfindung zur Bildung von
Mehrlagenblöcken ohne Füllschichtbeschichtung ihrer Decklage jeder Stapel aus übereinandergeschichteten Strangstücken auf Dickenmaß kalibriert wird. Dafür können mit
Vorzug die Stapel aus übereinandergeschichteten Strangstücken als Folge kontinuierlich aneinanderstoßender Stapel auf Dickenmaß kalibriert werden. Vorrichtungsseitig
ist für diesen Fall eine Kalibriereinrichtung vorgesehen,
mittels welcher zur Bildung von Mehrlagenblöcken ohne
Füllschichtbeschichtung ihrer Decklage jeder Stapel aus
übereinandergeschichteten Strangstücken auf gleichbleibendes
Dickenmaß bringbar ist, wobei dann vorzugsweise der Kalibriereinrichtung die Stapel aus übereinandergeschichteten
Strangstücken als Folge kontinuierlich aneinanderstoßender Stapel zuführbar sind.

Ist eine Kalibrierung auf Dickenmaß bei der mit strangweiser bzw. bandförmiger Füllschichtbeschichtung und Übereinanderschichtung der füllschichbeschichteten Stränge erwünscht, so wird bei dieser Erfindungsvariante zur Bildung
von Mehrlagenblöcken ohne Füllschichtbeschichtung ihrer
Decklage der Mehrlagenstrang zweckmäßig vor seiner Zerteilung in einzelne blockförmige Stücke auf Dickenmaß kalibriert,
obgleich es durchaus auch möglich ist, diesen Mehrlagenstrang vor der Kalibrierung in einzelne Mehrlagenblöcke aufzuteilen
und diese dann in entsprechender kontinuierlich aneinanderstoßender Stapelfolge in der Kalibriereinrichtung auf Dickenmaß zu kalibrieren. Für die Durchführung dieser bevorzugten
Verfahrensvariante kann vorrichtungsmäßig zweckmäßig der
Querschneideinrichtung eine Kalibriereinrichtung vorgeschaltet sein, mittels welcher zur Bildung von Mehrlagenblöcken ohne Füllschichtbeschichtung ihrer Decklage der Mehrlagenstrang auf gleichbleibendes Dickenmaß bringbar ist.

Sollen hingegen Mehrlagenblöcke mit Füllschichtbeschichtung
ihrer Decklage gebildet werden, so hat es sich als besonders
zweckmäßig erwiesen, wenn unabhängig von der Art, wie nach
einer der vorstehend geschilderten Verfahrensvarianten Stapel aus übereinandergeschichteten Strangstücken gebildet
worden sind, diese nach der Kalibrierung auf Dickenmaß als
Folge kontinuierlich aneinanderstoßender Stapel oder der
unzerteilte Mehrlagenstrang einer nachfolgenden Füllschichtbeschichtung zugeführt werden. Hierfür kann die Vorrichtung
nach der Erfindung zweckmäßig so ausgestaltet sein, daß der
Kalibriereinrichtung eine weitere Füllschichtauftragseinrichtung nachgeschaltet ist, welcher zur Bildung von Mehrlagenblöcken mit Füllschichtbeschichtung ihrer Decklage die
einzelnen Stapel aus übereinandergeschichteten Strangstücken
als Folge kontinuierlich aneinanderstoßender Stapel dieser
Art oder der unzerteilte Mehrlagenstrang zwecks nachfolgender Füllschichtbeschichtung der Oberfläche ihrer Decklage
zuführbar sind.

Häufig kommt es vor, daß bestimmte Füllschichtmaterialien,
wie beispielsweise Schokolade, Nougatcreme oder dergleichen,
sich in warmem oder heißem Zustand besser schichtmäßig aufbringen lassen als in kälterem Zustand, hingegen in kaltem
Zustand eine dauerhafte Konsistenz zeigen. In solchen Fällen empfiehlt es sich, in weiterer vorteilhafter Fortbil-

dung der Erfindung das mit Füllschichtauftrag versehene
Strangmaterial vor seiner Zerteilung in einzelne ein-
oder mehrlagige Strangstücke bzw. blockförmige Stücke
zu kühlen. Hierfür kann vorrichtungsmäßig zweckmäßig im
Förderweg des mit Füllschichtauftrag versehenen Strangmaterials zur jeweiligen Querschneideinrichtung, mittels
welcher es in einzelne ein- oder mehrlagige Strangstücke
bzw. blockförmige Stücke aufteilbar ist, jeweils eine
Kühleinrichtung angeordnet sein. Diese Kühlung des mit
Füllschichtauftrag versehenen Strangmaterials vor seiner
Weiterbehandlung in der Querschneideinrichtung erbringt
gerade bei solchen Füllschichtmaterialien den Vorteil, daß
die Querschneideinrichtung weitestgehend von Verschmutzungen frei bleibt und etwa während des Querschneidvorganges
aus dem Füllschichtauftrag herausgerissene Materialteilchen als krümelartige Bröckchen abfallen, welche rasch
und bequem sogar automatisch beseitigt werden können, ohne
zu Betriebsstörungen veranlassenden Verschmutzungen zu führen.

Häufig, und zwar bevorzugt für süßes Naschwerk, das von
Kindern gern genommen wird, ist es erforderlich, die blockförmigen Nahrungsmittelprodukte in Form länglicher stäbchenartiger Gebilde anzubieten. Um diese im Sinne der Erfindung
rationell fertigen zu können, kann gemäß weiterer zweckmäßiger Fortbildung der Erfindung nach der Blockbildung das mehrlagige Strangmaterial vor seiner Zerteilung in einzelne
Blockstücke oder können die einzelnen bereits vorhandenen
Mehrlagenblöcke in einzelne Streifen längszerteilt werden.
Hierfür wird dann nach der Erfindung im Förderweg des mehrlagigen Strangmaterials zur Querschneideinrichtung, mittels
welcher es in einzelne Blockstücke aufteilbar ist, oder der
einzelnen bereits vorhandenen Mehrlagenblöcke jeweils eine
Längsschneideinrichtung angeordnet, mittels welcher das mehrlagige Strangmaterial oder die Mehrlagenblöcke in einzelne

- 21 -

Streifen längszerteilbar sind. Diese Längszerteilung kann
dabei je nach Anordnung einer oder mehrerer etwa vorhandenen bzw. vorhandener Kalibriereinrichtung(en) vor oder
nach dem Kalibrieren vorgenommen werden, das je nach gewünschtem Endprodukt und/oder erforderlicher Verfahrensführung seinerseits an geeigneter Stelle des gesamten Herstellungs- bzw. Behandlungsverfahrens-Ablaufs vorgenommen
wird.

Nach einer anderen zweckmäßigen Weiterbildung der Erfindung kann zur Bildung von Mehrlagenblöcken mit streusel-
oder krümelförmigem Belag zumindest eines Teils ihrer
Außenoberfläche, vorzugsweise ihrer oberen Deckfläche, mit
beispielsweise Nußstücken, Kokosraspeln oder dergleichen
bei Vorhandensein eines Füllschichtauftrages auf der obersten Lage deren Füllschichtauftrag mit der Bestreuselung
bzw. Bekrümelung versehen und bei Fehlen eines solchen
Füllschichtauftrages auf der obersten Lage auf deren Außenseite durch Tauchen oder Besprühen eine Haftmittelschicht
und danach die Bestreuselung bzw. Bekrümelung aufgebracht
werden. Vorrichtungsmäßig wird hierfür im einen Fall vorgesehen, daß im Förderweg des als oberste mit Füllschichtauftrag versehene Lage vorgesehenen Strangmaterials in Form
eines mit Füllschichtauftrag versehenen kontinuierlichen
bandförmigen Stranges oder einer Folge querzerteilter plattenförmiger Stücke desselben zur Bildung von Mehrlagenblöcken mit streusel- oder krümelförmigem Belag zumindest
eines Teils ihrer Außenoberfläche, vorzugsweise ihrer oberen Deckfläche, mit beispielsweise Nußstücken, Kokosraspeln
oder dergleichen eine Einrichtung zur Aufbringung von Streuseln oder Krümeln oder dergleichen auf die freie mit Füllschichtauftrag versehene Oberfläche vorgesehen ist. Andererseits kann die Vorrichtung nach der Erfindung zweckmäßig so
ausgestaltet werden, daß im Förderweg des als oberste Blocklage vorgesehenen Strangmaterials in Form eines nicht mit
Füllschichtauftrag versehenen kontinuierlichen bandförmigen Stranges oder einer Folge querzerteilter plattenförmiger
Stücke desselben oder des bereits gebildeten Mehrlagenblockmaterials in Form gleichfalls eines kontinuierlichen
bandförmigen Mehrlagenstranges oder einer Folge querzerteilter Mehrlagenblockstücke zur Bildung von Mehrlagenblöcken mit streusel- oder krümelförmigem Belag zumindest eines Teils ihrer Außenoberfläche, vorzugsweise ihrer oberen Deckfläche, mit beispielsweise Nußstücken, Kokosraspeln oder dergleichen eine Tauch- oder Besprüheinrichtung zur Aufbringung einer Haftmittelschicht und dieser nachgeschaltet eine Einrichtung zur Aufbringung von
Streuseln oder Krümeln oder dergleichen auf die mit der
Haftmittelschicht versehene(n) Oberfläche(n) vorgesehen
ist. In beiden Fällen kann mit Vorzug die Einrichtung
zur Aufbringung von Streuseln, Krümeln oder dergleichen
und gegebenenfalls die Einrichtung zur Aufbringung einer
Haftmittelschicht der Schichteinrichtung vorgeschaltet oder
nachgeschaltet sein. Dies hängt von der Art der Verfahrensführung und nicht zuletzt von der gewünschten Ausgestaltung
des Endproduktes und davon abhängig auch von den Eigenschaften der etwa freiliegenden Füllschichtbeschichtung und/oder
der aufzubringenden Streusel bzw. Krümel, Raspelstücke oder
dergleichen und/oder des jeweiligen zur Verwendung kommenden
Haftmittelschichtmaterials ab. Als Haftmittelschicht wird
bei Mehrlagenblockmaterial ohne Füllschichtbeschichtung
der oberen Deckschicht häufig Schokolade, Nougatcreme oder
Fettglasur oder dergleichen verwandt.

Im übrigen kann es durchaus erwünscht sein, daß die fertigen Endprodukte eine Außenumkleidung durch eine Hüllschicht
beispielsweise aus Schokolade oder dergleichen aufweisen,
und zwar dies sowohl mit als auch ohne streusel- bzw. krümelförmigem Belag auf ihrer Oberfläche und auch mit oder ohne freiliegender Füllschichtauflage auf der freien Oberfläche ihrer zuoberst liegenden Decklage. Hierfür kann in weiterer zweckmäßiger Fortbildung der Erfindung vorgesehen sein,

- 23 -

0024716

daß die gebildeten mehrlagigen Blöcke nach Fertigstellung ihrer geometrischen Außenkontur, d. h. also gegebenenfalls nach Kalibrierung und Quer- und/oder Längszerteilung in die gewünschte Stückgröße, durch Tauchen oder Besprühen mit der Hüllschicht versehen und erforderlichenfalls anschließend gekühlt werden. Hierfür wird die Vorrichtung nach der Erfindung so ausgestaltet, daß im Förderweg der gebildeten mehrlagigen Blöcke nach Fertigstellung ihrer geometrischen Außenkontur eine Einrichtung zur Aufbringung der Hüllschicht mittels Tauchens oder Besprühens und erforderlichenfalls eine nachgeschaltete Kühleinrichtung vorgesehen ist.

Im folgenden wird die Erfindung auch bezüglich untergeordneter weiterer Teilaufgaben und Lösungen für diese mit den dabei erzielten Vorteilen an Hand einiger bevorzugter Ausführungsbeispiele, die in den Zeichnungen lediglich schematisch dargestellt sind, rein beispielsweise näher beschrieben. Dabei zeigen:

Fig. 1 mit ihren Teilfiguren Fig. 1a bis Fig. 1d eine Seitenansicht einer Vorrichtung nach der Erfindung,

Fig.2a einen Querschnitt durch eine Ausführungsform eines Extruderauslasses nach der Erfindung,

Fig.2b die Seitenansicht auf diesen Extruderauslaß von dessen freier Stirnseite (rechts) her,

Fig.3a in der Darstellung gemäß Fig. 2a entsprechender Darstellung eine andere Ausführung des Extruderauslasses mit nachgeschalteter Strangaufteilung als weitere Ausführungsform der Erfindung,

Fig. 3b in der Darstellung gemäß Fig. 2b entsprechender
Darstellung die Stirnansicht dieser Extruderöffnung von deren freier Seite her, d.h. entgegen
der Expansionsrichtung,

Fig. 4a in der Darstellung gemäß Fig. 2a und Fig. 3a entsprechender Darstellung eine andere Ausführungsform eines Extruderauslasses,

Fig. 4b in der Darstellung gemäß Fig. 2b und Fig. 3b entsprechender Darstellung die entgegen der Extrusionsrichtung gesehene Darstellung des Extruderauslasses,
und

Fig. 5 in vergrößertem Maßstab einen Axialschnitt durch eine als Expansions-Führungseinrichtung ausgebildete
Expansionskammer nach der Erfindung.

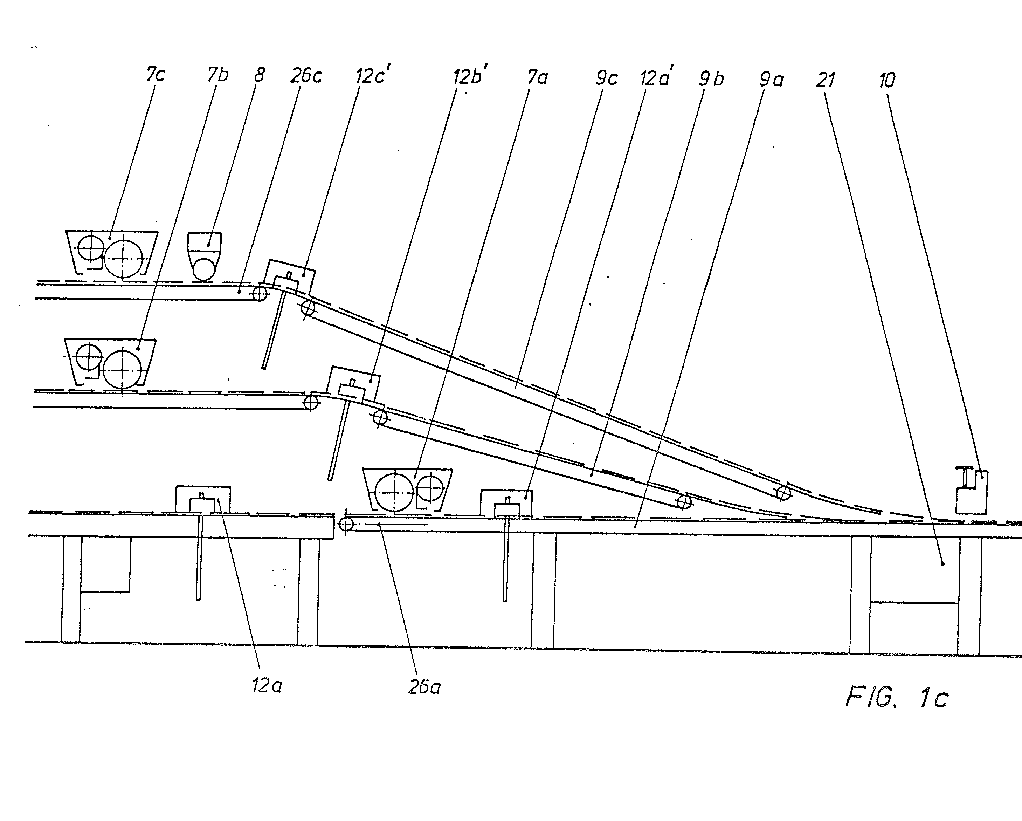

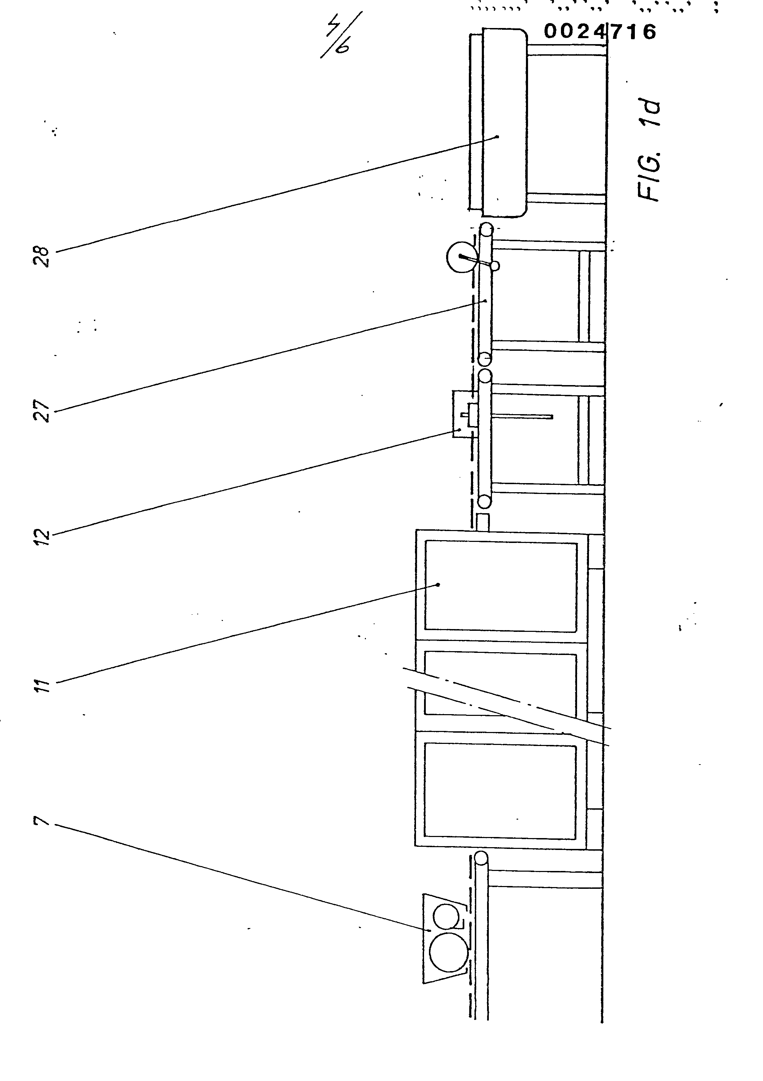

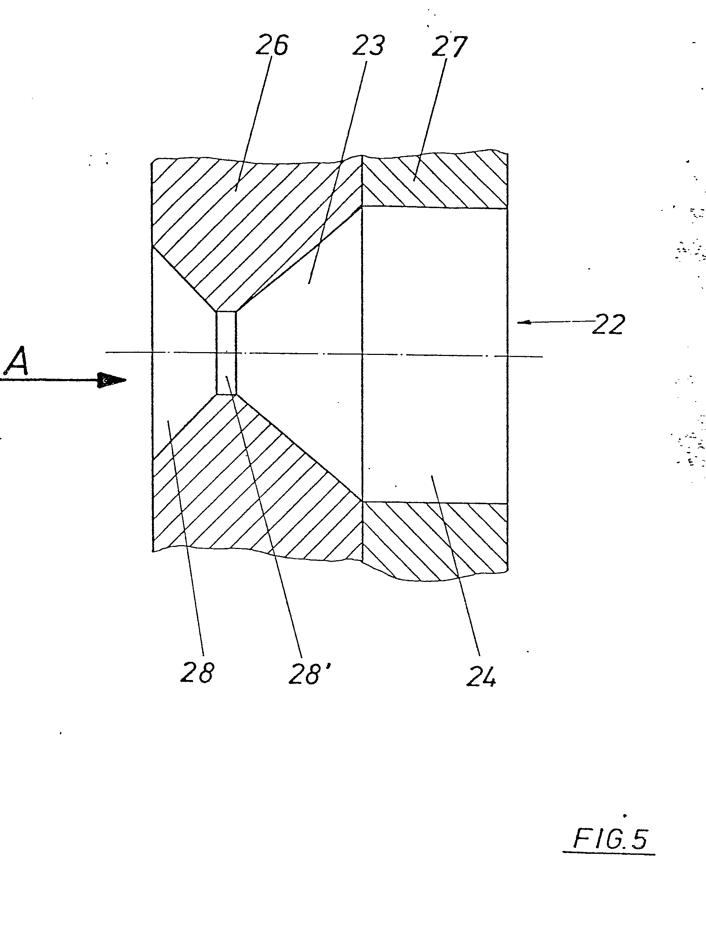

In den Figuren 1c bis 1d, die in ihrer Gesamtheit die komplette Anlage bzw. Vorrichtung nach der Erfindung schematisch darstellen, ist mit 4 die Extrusionseinrichtung und
mit 5 die Expansionseinrichtung nach der Erfindung bezeichnet. Es ist ersichtlich, daß der vorzugsweise mit einer
Doppelschnecke arbeitende Extruder 4 über eine aus dem
Rohstoffmischer 1 beschickte automatische Extruder-Beschickung 2 mit Rohstoff-Mischgut-Anförderer 3 beschickt
wird.

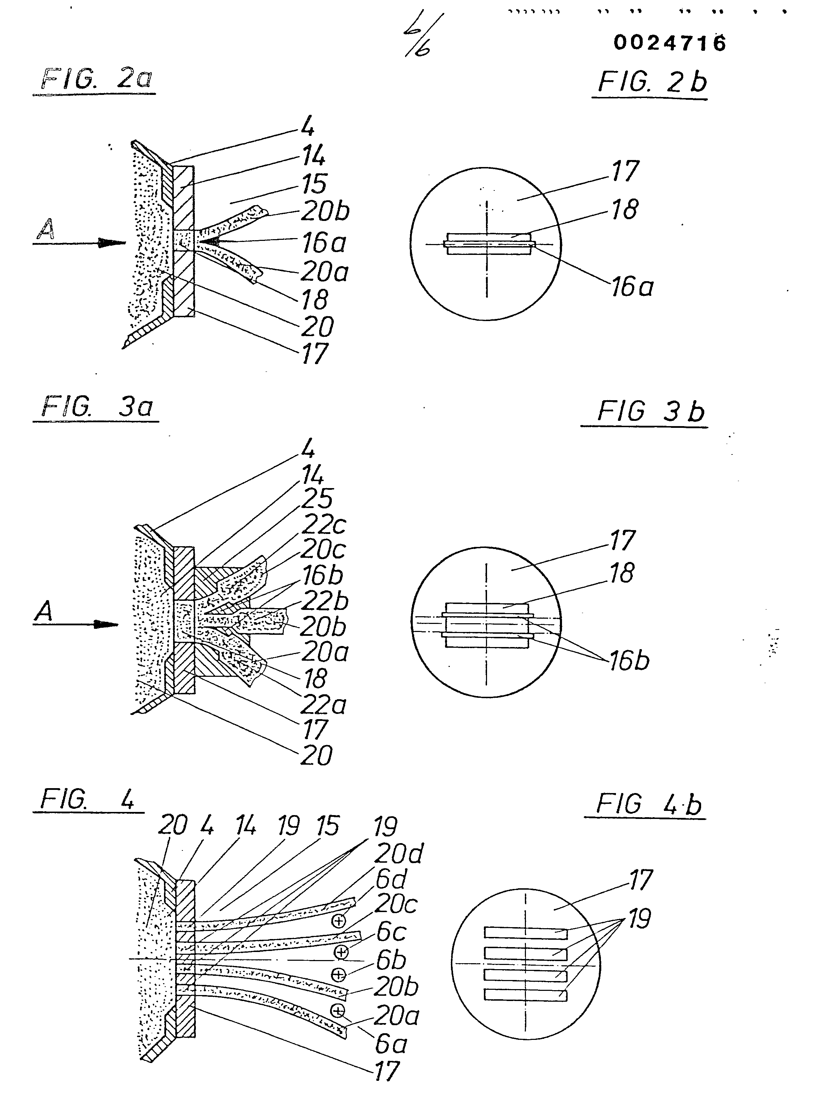

Der Extrusionsteig 20 wird in der Extrusionseinrichtung
4 durch eine den Extruderauslaß nach außen hin öffnende
Extrusionsöffnung 18 (Fig. 2a, 2b bzw. Fig. 3a, 3b) bzw.
19 (Fig. 4a bzw. 4b) in Extrusionsrichtung A extrudiert.
Wie aus Fig. 2a und 2b ersichtlich, wird der Extruderauslaß
14 durch eine Lochplatte 17 mit einer schlitzförmigen Auslaßöffnung 18 verschlossen, die einen lichten Querschnitt
in Form eines schmalen, langgezogenen Rechteckes hat, wie
besonders deutlich aus Fig. 2b zu entnehmen.

Der durch die Extrusionsöffnung 18 austretende Extrusionsstrang gelangt dabei in den als Ganzes mit 15 bezeichneten Expansionsraum, in welchem beim Ausführungsbeispiel gem. Fig. 2a und 2b die Einrichtung 16a zur Aufteilung dieses Extrusionsstranges in zwei Teilstränge 20a und 20b angeordnet ist. Diese Aufteilungseinrichtung 16a weist bei diesem Ausführungsbeispiel eine im Vorschubweg des Extrusionsstranges angeordnete Spaltklinge, wie in Fig. 2a schematisch dargestellt, oder aber einen Teilungsdraht auf, gegen die bzw. den der Extrusionsstrang im Verlaufe seiner Vorschubbewegung in Richtung A anfließt. Durch diese Spaltklinge bzw. diesen Teilungsdraht, die bzw. der durchaus feststehend, d.h. ohne Aufbringung oszillierender Teilungsbewegung arbeiten kann, wird der Extrusionsstrang während seiner Expansion in der Expansionskammer 15 in die einzelnen Teilstränge 20a, 20b aufgeteilt. Statt der beim Ausführungsbeispiel gem. Fig. 2a und 2b gezeigten Aufteilungseinrichtung 16a, durch welche lediglich zwei Teilstränge 20a, 20b aus dem Extrusionsstrang erzielbar sind, kann auch eine Aufteilungseinrichtung anderer Ausbildung zum Einsatz kommen, mittels derer der Extrusionsstrang in eine größere Zahl von Teilsträngen aufgeteilt wird.

Eine solche größere Zahl, nämlich beispielsweise drei Teilstränge 20a, 20b und 20c, sind bei dem Ausführungsbeispiel gem. Fig. 3a und 3b vorgesehen. Hier ist der Extruderauslaß 14 durch eine Lochplatte 17 verschlossen, die zwar gleichfalls nur eine Extrusionsöffnung 18 aufweist, die aber bei diesem Ausführungsbeispiel hinsichtlich ihres lichten Querschnittes größer ausgelegt ist, und zwar so, daß der durch diesen austretende Extrusionsstrang eine solche Breite aufweist, daß er in die gewünschte Anzahl von Teilsträngen 20a, 20b, 20c aufteilt werden kann. Diese Aufteilung in Teilstränge erfolgt bei diesem Ausführungsbeispiel nicht etwa im Expansionsraum, wie in Fig. 2a und 2b schematisch angedeutet, sondern in einem Übergangsstück 25 zwischen Extruderauslaß 14 und Expansionsraum. Die Aufteilung des durch die Extrusionsöffnung 18 austretenden Extrusionsstranges in die gewünschte Zahl von Teilsträngen, beim Ausführungsbeispiel gem. Fig. 3a und 3b in drei Teilstränge 20a, 20b, 20c, erfolgt durch die Aufteilungseinrichtung 16b, die hier zwei klingenartige Teilungselemente aufweist, die in Fig. 3a schematisch dargestellt sind. Weiterhin weist das Übergangsstück 25 die Einlauföffnungen für Expansionskammern 22a bzw. 22b bzw. 22c auf, in denen die Extrusions-Teilstränge 20a bzw. 20b bzw. 20c formmäßig geführt expandieren können.

Die nach der Erfindung vorgesehene formmäßig geführte Expansion des Extrusionsstrang-Materials läßt sich besonders einleuchtend anhand der schematischen Darstellung einer Expansionskammer in Fig. 5 erläutern. Mit 26 ist dabei ein Wandungsteil des Extruders bezeichnet, das die sich in Extrusionsrichtung A verjüngende Extrusionsöffnung 28 enthält. Der durch diese bzw. deren Auslaßende 28' austretende Extrusionsstrang gelangt dann in eine sich in Extrusionsrichtung A erweiternde Kammer 23 im Teil 26, welche bereits den Einlauf der als Ganzes mit 22 bezeichneten Expansionskammer darstellt. Das Extrusionsmaterial zwängt sich, nachdem es die Möglichkeit hat, sein Volumen unter dem Druck des nachschiebenden Materials praktisch schlagartig zu vergrößern, an den Wandungen des Kammereinlaufs 23 entlang und wird durch diese einem ersten Formungsvorgang unterworfen. In vielen Fällen reicht eine solche Extrusionsstrangformung mittels lediglich einer sich etwa trichterförmig in Extrusionsrichtung erweiternden Kammer 23
aus, um dem Extrusionsmaterial die gewünschte Querschnittsformgebung zu vermitteln. Insbesondere kann
die Neigung der Wandungen der Einlaufkammer 23 und
deren axiale Länge anders gewählt werden, als in Fig.
5 dargestellt. Um die Güte der zwangsweisen Formgebung
für das Extrusionsmaterial während seines Expansionsvorganges noch zu verbessern, ist beim Ausführungsbeispiel gem. Fig. 5 auf das Teil 26 eine Erweiterungsplatine 27 mit einer dem gewünschten Endquerschnitt
des Expansionsendproduktes entsprechenden Zusatzkammer
24 aufgesetzt. Das in der Kammer 23 vorgeformte Expansionsgut gelangt im Zuge seiner Vorschubbewegung in
Richtung A in die Kammer 24 und hat während seines
Expansionsvorganges nunmehr lediglich noch die Möglichkeit, etwa vorhandenen Expansionsdrang in Vorschubrichtung, d.h. in Richtung A, sich ausarbeiten zu lasen,
wobei jedoch gewährleistet ist, daß durch diesen Expansionsdrang das aus dem Extruder 4 bzw. dessen Extrusionsöffnung 28, 28' kommende Expansionsmaterial

sich zuverlässig auch in die Ecken des lichten
Querschnittes der Expansionskammer 22 bzw. von deren
Teilkammer 24 gedrückt hat. Das erwünschte Ergebnis ist
ein Expansionsstrang 20a bzw. 20b bzw. 20c, der über
seiner ganzen Länge gleichbleibend den gewünschten
Strangquerschnitt aufweist, der ungeachtet der Konsistenz und sonstigen Eigenschaften des Expansionsmaterials
und seines Vorbehandlungsschicksals im vorgeschalteten
Extruder 4 sowie der Verfahrensführung des Expansionsvorganges stets durch die formmäßige Zwangsführung in
der Expansionskammer 22 bestimmt wird.

Bei dem weiteren Ausführungsbeispiel der Erfindung gem.
Fig. 4a und 4b wird nicht ein einzelner Strang extrudiert,
der dann in geeigneter Weise in eine Vielzahl einzelner Teilstränge aufgeteilt wird, wie bei den Ausführungsbeispielen gem. Fig. 2a, 2b bzw. Fig. 3a, 3b, sondern
es werden hier über denselben Extruderauslaß 14 gleichzeitig mehrere Stränge 20a, 20b, 20c und 20d extrudiert.
Zu diesem Zwecke ist der Extruderauslaß 14 durch eine
Lochplatte 17 verschlossen, welche eine der gewünschten
Zahl der Extrusionsstränge 20a bis 20d entsprechende
Zahl, im vorliegenden Ausführungsbeispiel vier Extrusionsöffnungen 19 aufweist. Durch die erfindungsgemäß
vorgesehene Extrusion dieser beispielsweise vier Stränge
20a bis 20d gleichzeitig durch denselben Extruderauslaß
14 wird erfindungsgemäß bereits eine bisher nicht für
erreichbar gehaltene Vergleichmäßigung des Strangquerschnittes in dem Sinne erreicht, daß nicht nur über der
Länge eines Stranges 20a bzw. 20b bzw. 20c bzw. 20d der
Strangquerschnitt eine hervorragende Gleichmäßigkeit
aufweist, sondern dieser Strangquerschnitt auch von
Strang zu Strang allenfalls geringfügige und für die
Eignung des Strangmaterials für den erfindungsgemäßen
Zweck der Bildung blockförmiger Nahrungsmittelprodukte,
wie diese nachfolgend noch beschrieben wird, ohne Belang
bleibende Unterschiede aufweist. Die durch die Extrusionsöffnungen 19 austretenden Stränge 20a bzw. 20b bzw.
20c bzw. 20d werden anschließend in dem in Fig. 4a hinsichtlich seiner speziellen Ausgestaltung nicht näher
dargestellten und lediglich als Ganzes mit 15 bezeichneten Expansionsraum dem erforderlichen Expansionsvorgang
unterworfen. Es können auch hier wieder einem jedem Strang
20a bzw. 20b bzw. 20c bzw. 20d einzeln zugeordnet Expansionskammern vorgesehen sein, in denen der jeweilige
Strang zwangsweise formmäßig geführt expandiert. Bereits
im Expansionsraum 15 oder diesem nachgeschaltet kann eine
Vereinzelungsfördereinrichtung vorgesehen sein, durch
welche die einzelnen Extrusions- bzw. Expansionsstränge
mit sich etwa fächerförmig vergrößerndem Abstand auseinandergeleitet werden. Eine solche Verzweigungsfördereinrichtung ist in Fig. 4a durch die Rollen 6a bzw. 6b
bzw. 6c bzw. 6d symbolisiert.

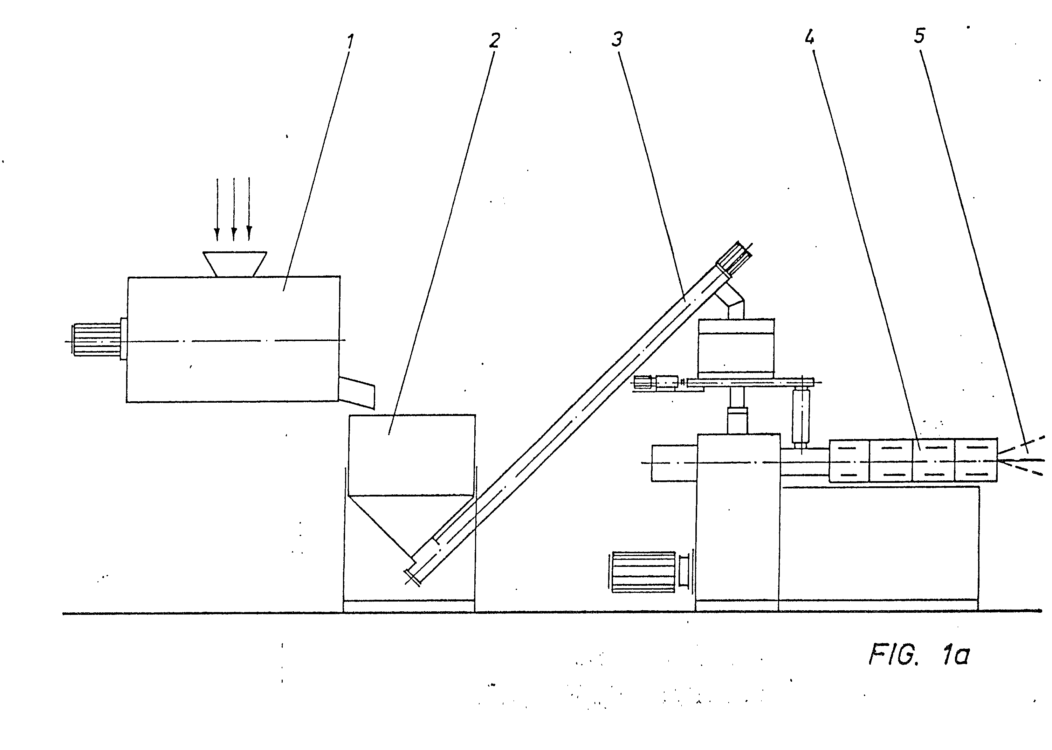

Wie aus Fig. 1a bis 1d ersichtlich, kann zur Erreichung
einer gewünschten Endrösche bzw. Krossheit eine Rösteinrichtung 13 vorgesehen sein, welche die einzelnen
Stränge 20a bis 20d zu durchlaufen haben. Diese Rösteinrichtung kann je nach den vorhandenen konstruktiven
Gegebenheiten und den Eigenschaften des zu behandelnden
Expansionsstranggutes mit beispielsweise Heißgas und/oder
Hochfrequenz und/oder Infrarotstrahlung beheizt werden.

An die im übrigen nur fakultativ vorzusehende Rösteinrichtung 13 sich anschließend ist die Verzweigungsfördereinrichtung mit Bandförderer, 6a, 6b und 6c dargestellt. Durch diese werden die kontinuierlich ankommenden
Expansionsstränge 20a bis 20d, im Ausführungsbeispiel
gem. Fig. 1a bis 1d lediglich drei Stränge 20a, 20b und
20c, kontinuierlich auseinandergeleitet und jeweils
einer Füllschichtauftrageinrichtung 7a bzw. 7b bzw. 7c
zugeführt. Wie fakultativ dargestellt, können dabei den
Füllschichtauftrageinrichtungen 7a bzw. 7b bzw. 7c vorgeschaltet jeweils Querschneideinrichtungen 12a bzw. 12b
bzw. 12c vorgesehen sein, mittels derer das Strangmaterial
in einzelne etwa plattenförmige Stücke zerteilt wird, die
dann in aneinanderstoßender Folge der nachgeordneten
Füllschichtauftrageinrichtung 7a bzw. 7b bzw. 7c mittels
des jeweils zugeordneten Förderers 26a bzw. 26b bzw. 26c
zugeführt werden, um jeweils als solche Folge kontinuierlich mit Füllschichtauftrag geeigneter Konsistenz und
Ausbildung versehen zu werden.

Andererseits kann es durchaus zu bevorzugen sein, wenn die
einzelnen Stränge 20a bzw. 20b bzw. 20c jeweils als unzerteilte Bänder die zugeordnete Füllschichtauftragseinrichtung 7a bzw. 7b bzw. 7c durchlaufen, um erst anschließend in einzelne etwa plattenförmige Stücke von der gewünschten Länge des späteren zu erstellenden Blockes entsprechender Länge aufgeteilt zu werden. In einem solchen Falle werden die Querschneideinrichtungen 26a, 26b und 26c nicht benötigt, vielmehr Querschneideinrichtungen 12a' bzw. 12b' bzw. 12c' vorgesehen , die den Füllschichtauftrageinrichtungen 7a bzw. 7b bzw. 7b jeweils nachgeordnet sind. In diesen Querschneideinrichtungen 12a' bzw. 12b' bzw. 12c' werden die einzelnen Stränge jeweils in füllschichtbeschichtetem Zustand in einzelne Stücke aufgeteilt.

Allerdings braucht nach der Erfindung die Aufteilung der einzelnen Stränge auch jetzt noch nicht durch hierfür spezisch vorgesehene Querschneideinrichtungen 12a', 12b', 12c' vorgenommen zu werden, vielmehr können die einzelnen füllschichtbeschichteten bandförmigen Stränge ebenso wie ein etwa vorgesehener weiterer nicht mit Füllschichtauftrag versehener Strang extrudierten und anschließend expandierten Materials jeweils als kontinuierliches Band einer Schichtstation 21 zugeführt werden. Ungeachtet dessen, ob nun die füllschichtbeschichteten Einzelstränge ebenso wie ein etwa vorgesehener als Deckblattmaterial bestimmter nicht mit Füllschichtauftrag versehener Strang als kontinuierliches Band oder als Folge von einzelnen aneinanderstoßenden etwa plattenförmigen Stücken der Schichteinrichtung 21 zugeführt werden sollen, sind hierfür geeignete Fördereinrichtungen 9a bzw. 9b bzw. 9c vorgesehen. In der Schichteinrichtung 21 werden nun die einzelnen mit Füllschichtauftrag versehenen Stranglagen ebenso wie eine etwa vorgesehene nicht mit Füllschichtauftrag versehene Decklage in geeigneter Weise entweder als kontunierliche Bänder oder aber als etwa plattenartige Stücke übereinandergeschichtet.

Der Schichteinrichtung 21 nachgeschaltet ist eine
Kalibriereinrichtung 10 vorgesehen, mittels welcher
der in der Schichteinrichtung 21 gebildete Mehrlagenblock auf gewünschtes Dickenmaß gebracht wird. Nachdem
dieser Mehrlagenblock auf diese Weise seine endgültige
geometrische Form erhalten hat, kann er, sofern erwünscht,
nochmals durch eine Füllschichtauftragseinrichtung 7 geschickt werden, was im übrigen gleichfalls mit Vorzug
in Form einer kontinuierlichen Folge aneinanderstoßender
Mehrlagenblöcke geschieht, um in dieser auf der Oberseite
seiner Decklage mit einem gewünschten weiteren Füllschichtauftrag versehen zu werden.

An diese Füllschichtauftrageinrichtung 7 anschließend ist
eine Kühleinrichtung 11 dargestellt, in welcher der Mehrlagenblock nach Verlassen der Füllschichtauftrageinrichtung
7 oder bei deren Fehlen nach Verlassen der Schichteinrichtung
21 in der Weise gekühlt werden kann, wie das das eine oder
andere Füllschichtmaterial im Mehrlagenblock etwa erfordern sollte. Eine solche Kühleinrichtung 11 kann in übrigen,
sollte dies für erforderlich erachtet werden, im Rahmen
der Erfindung auch vor der Schichteinrichtung 21 im Förderweg 9a bzw. 9b bzw. 9c eines jeden füllschichtbeschichteten
Stranges 20a bzw. 20b bzw. 20c der jeweiligen Füllschichtauftrageinrichtung 7a bzw. 7b bzw. 7c nachgeschaltet vorgesehen sein, ohne daß dies in der Zeichnung dargestellt
wäre.

Bei Bildung des Mehrlagenblockes durch Übereinanderschichtung
kontinuierlichen bandförmigen Strangmaterials in der Schichteinrichtung 21 erfolgt die Aufteilung in einzelne Mehrlagenblockstücke gewünschter Länge vor oder nach einer etwa vorgesehenen Füllschichtbeschichtung der freien Oberfläche der
Decklage bzw. vor oder nach etwa vorgesehener Kühlung in
einer Kühleinrichtung 11, wie dargestellt. Hierfür ist die
dargestellte Querschneideinrichtung 12 vorgesehen, mittels welcher das als kontinuierlicher bandförmiger Mehrlagenstrang ankommende Mehrlagenblockmaterial in einzelne Blockstücke gewünschter Länge aufgeteilt wird.

Das Mehrlagenblockmaterial wird nun mit oder ohne Füllschichtauftrag auf der Oberseite seiner Decklage sowie mit oder ohne Kühlung durch eine Kühleinrichtung 11 einer Längsschneideinrichtung 27 zugeführt, sofern erwünscht ist, daß die etwa plattenförmige Breite aufweisenden Mehrlagenblöcke auf riegelartige schmalere Breite gebracht werden sollen, wie diese beispielsweise für einige auf dem Markt befindliche Süßwarenprodukte gefordert wird.

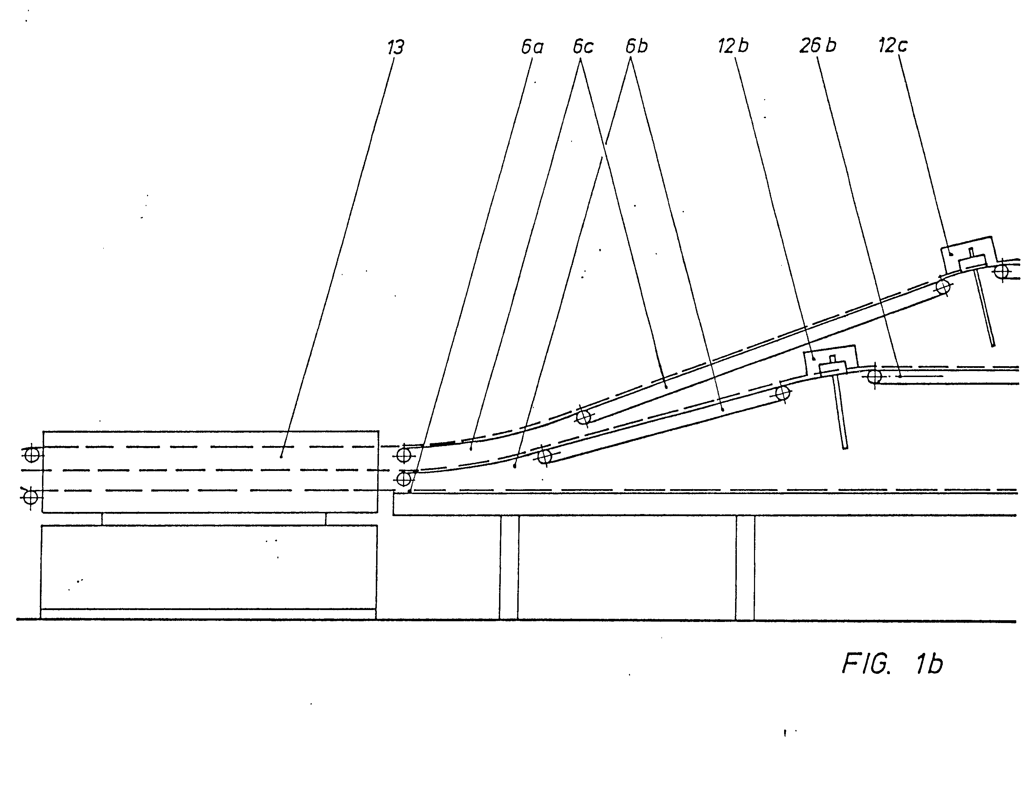

Das in Fig. 1b bis 1d dargestellte Ausführungsbeispiel ist für eine weitere Variante eines blockförmigen Nahrungsmittelproduktes nach der Erfindung ausgelegt. Dieses soll nämlich auf der Oberseite einer Decklage eine Bestreuselung mit beispielsweise Haselnußbruch oder Walnußstücken aufweisen. Gehalten werden soll diese Bestreuselung auf der Oberseite der Decklage dieses blockförmigen Nahrungsmittelproduktes im angenommenen Fall durch den mittels der Füllschichtauftrageinrichtung 7c auf das Expansionsstrangmaterial 20c aufgebrachten Füllschichtauftrag. Aus diesem Grunde ist der Füllschichtauftrageinrichtung 7c eine Bestreuselungseinrichtung 8 nachgeschaltet, mittels derer die gewünschten Streusel bzw. Krümel, wie etwa Haselnußbruch oder Walnußstücke oder aber auch andere Materialien, aufgebracht werden. Das so mit Bestreuselung versehene Strangmaterial gelangt dann über den Förderer 9c in bereits beschriebener Weise zur Schichtstation 21, in welcher es als Decklage für die Mehrlagenblockbildung Verwendung findet. Bei Bildung derartiger Mehrlagenblöcke ist allerdings eine der Übereinanderschichtung der einzelnen Lagen einschließlich der Bestreuselung bzw. Bekrümelung beschriebener Art aufweisenden Decklage nachgeschaltete Kalibrierung mit einigen Schwierigkeiten verbunden, so daß es sich in diesem Falle empfiehlt, die Kalibrierung auf Dickenmaß entweder überhaupt nicht vorzunehmen
oder aber auf alle unterhalb der Decklage zu liegen
kommenden füllschichtbeschichteten Lagen des Mehrlagenblockes zu beschränken und dafür die Kalibriereinrichtung 10 der Schichteinrichtung 21 vorzuordnen,
in welcher dann lediglich der auf Dickenmaß kalibrierte
Mehrlagenblock mit seiner Decklage versehen wird. Auch
hier jedoch ist dann dafür Sorge zu tragen, daß an der
Kalibriereinrichtung das Füllschichtauftragsmaterial
der zweitobersten Lage nicht haften bleibt.

Weiterhin ist dargestellt, daß das Mehrlagenblockmaterial des Nahrungsmittelproduktes nach der Erfindung
auch auf seiner gesamten Oberfläche mit einer Hüllschicht beispielsweise aus Schokolade, Nougatcreme oder
dergleichen überzogen sein kann. Zu diesem Zwecke ist
der Längsschneideeinrichtung 27 nachgeschaltet ein
Tauchbad 28 dargestellt, in welchem die einzelnen
Mehrlagenblockriegel mit der Hüllschicht versehen
werden. Statt eines Tauchbades kann im übrigen auch
eine nicht dargestellte Besprüheinrichtung vorgesehen
sein, mittels welcher die Hüllschicht durch Aufsprühen
auf die Mehrlagenblockriegel-Oberfläche aufgebracht
wird. Es ist ersichtlich, daß die Bestreuselungs- bzw.
Bekrümelungseinrichtung 8 auch vor dem Tauchbad bzw.
der Besprühungseinrichtung oder aber dieser nachgeschaltet angeordnet sein kann, wobei im übrigen je nach
Art des Bestreuselungs- bzw. Bekrümelungsauftrages auch
eine Anordnung vor der Längsschneideeinrichtung 27 vorteilhaft sein kann. Jede Anordnung der Bestreuselungs-
bzw. Bekrümelungseinrichtung 8 im Behandlungsweg nach
der Schichteinrichtung 21 gestattet eine zweckmäßige
Kalibrierung des Mehrlagenblockmaterials auf Dickenmaß. Je nach gewünschtem Endzustand des blockförmigen Nahrungsmittelproduktes nach der Erfindung kann sich dann an die Schichteinrichtung 21 oder eine dieser etwa nachgeschaltete Kalibriereinrichtung 10 oder eine nachgeschaltete Füllschichtauftrageinrichtung 7 oder eine nachgeschaltete Kühleinrichtung 11 oder eine nachgeschaltete Querschneideinrichtung 12 oder eine nachgeschaltete Längsschneideinrichtung 27 oder eine nachgeschaltete Besprüheinrichtung bzw. ein Tauchbad 28 für die Aufbringung eines Hüllschichtüberzuges eine geeignete Förder- und/oder Verpackungseinrichtung anschließen, mittels welcher die blockförmigen Nahrungsmittelprodukte nach der Erfindung ihre gewünschte Weiterbehandlung erfahren.

Es ist erkennbar, daß die Erfindung, obgleich sie lediglich an Hand einiger bevorzugter Ausführungsbeispiele dargestellt ist, nicht auf diese beschränkt ist, vielmehr dem Fachmann vielfältige Möglichkeiten für deren Anpassung an die jeweiligen konstruktiven Möglichkeiten und im Nachrüstungsfalle die etwa vorhandenen maschinellen und anlagemäßigen Gegebenheiten und/oder die Forderungen des jeweiligen Einsatzfalles im Hinblick auf die zu verarbeitenden Ausgangsprodukte und/oder die Eigenschaften des gewünschten Endproduktes durch andere Kombination der Merkmale der Erfindung oder deren Austausch gegen gleichwirkende Mittel gegeben sind, ohne daß dadurch der Rahmen der Erfindung verlassen würde.

PATENTANWALT
HANS-JOACHIM KANTNER
DIPLOM-INGENIEUR

PATENTANWALT DIPL.-ING. H.-J. KANTNER
DARMSTÄDTER STR.8. 607 LANGEN/HESSEN

0024716

6070 LANGEN, 18. JULI 1979
DARMSTÄDTER STRASSE 8    Ktr./n.
TELEPHON: (06103) 23029
TELEGRAMM: KANTNERPATENTE
              LANGENHESSEN

Neue Telegrammanschrift:
New telegram address:    IDEALAW

ANSPRÜCHE
==================

1.) Verfahren zur Herstellung von blockförmigen
Nahrungsmittelprodukten aus mindestens zwei
Lagen aus extrudierter und anschließend expandierter pflanzlicher Stärke mit zwischen-
und/oder aufliegendem Füllschichtauftrag und/
oder mit Außenumkleidung durch eine Hüllschicht
vorzugsweise aus Schokolade, Nougat oder dergleichen, dadurch gekennzeichnet, daß der Extrusionsteig für alle Blocklagen gleichzeitig
durch denselben Extruderauslaß extrudiert und
anschließend kontinuierlich expandiert wird,
wobei er während des Extrusionsvorganges oder
während des Expansionsvorganges in eine der gewünschten Lagenzahl entsprechende Zahl von kontinuierlichen bandförmigen Strängen aufgeteilt
wird, und daß zumindest der bzw. die im fertigen blockförmigen Nahrungsmittelprodukt nicht
als Decklagenmaterial bestimmte(n) Strang bzw.
Stränge jeweils einzeln kontinuierlich mit einem Füllschichtauftrag versehen und übereinan-

BANKKONTO. DRESDNER BANK AG. FRANKFURT AM MAIN NR 4-112 519
POSTSCHECKKONTO NR. 285560 FRANKFURT

dergeschichtet werden.

2.) Verfahren nach Anspruch 1, dadurch gekennzeichnet, daß der Extrusionsteig durch eine Extrusionsdüse mit mehreren etwa rechteckförmigen Extrusionsöffnungen von der gewünschten Querschnittsform der
backförmigen Stränge ähnlicher Form extrudiert wird
und daß die Extrusionsstränge einzeln expandiert
und danach mit sich etwa fächerförmig vergrößerndem
Abstand auseinandergeleitet werden.

3.) Verfahren nach Anspruch 1, dadurch gekennzeichnet,
daß der Extrusionsteig durch eine Extrusionsdüse mit
einer etwa rechteckförmigen Extrusionsöffnung von
der Summe der gewünschten Querschnittsformen der
bandförmigen Stränge ähnlicher Form extrudiert und
danach der Extrusionsstrang in die gewünschte Strangzahl aufgeteilt wird.

4.) Verfahren nach Anspruch 3, dadurch gekennzeichnet,
daß der Extrusionsstrang vor seiner Aufteilung in
einzelne bandförmige Stränge als Ganze expandiert
wird und daß die durch nach der Expansion erfolgte
Aufteilung gewonnenen Stränge mit sich etwa fächerförmig vergrößerndem Abstand auseinandergeleitet
werden.

5.) Verfahren nach Anspruch 3, dadurch gekennzeichnet,
daß der Extrusionsstrang vor dem Expandieren in einzelne Teilstränge aufgeteilt wird und daß diese jeweils einzeln expandiert und danach mit sich etwa
fächerförmig vergrößerndem Abstand auseinandergeleitet werden.

6.) Verfahren nach einem der vorhergehenden Ansprüche, dadurch gekennzeichnet, daß der Extrusionsteig
nach der Extrusion formmäßiggeführt expandiert
wird.

7.) Verfahren nach einem der vorhergehenden Ansprüche,
dadurch gekennzeichnet, daß vor Aufbringung des
Füllschichtauftrages die einzelnen bandförmigen
Stränge geröstet werden.

8.) Verfahren nach einem der vorhergehenden Ansprüche,
dadurch gekennzeichnet, daß die einzelnen bandförmigen Stränge jeweils in etwa plattenförmige Stücke
von der gewünschten Blocklänge entsprechender Länge
aufgeteilt und die mit Füllschichtauftrag zu versehenden Stränge als Folge kontinuierlich aneinanderstoßender Stücke der nachfolgenden Füllschichtbeschichtung zugeführt und nach dieser im Folgeabstand zueinander vergrößert und zusammen mit einem
entsprechenden Stück eines etwaigen nicht mit Füllschichtauftrag versehenen Stranges stückweise übereinandergeschichtet werden.

9.) Verfahren nach einem der Ansprüche 1 bis 7, dadurch
gekennzeichnet, daß die einzelnen mit Füllschichtauftrag zu versehenden Stränge der Füllschichtbeschichtung unzerteilt zugeführt und nach dieser ebenso wie ein etwaiger nicht mit Füllschichtauftrag versehener Strang jeweils in einzelne etwa plattenförmige Stücke von der gewünschten Blocklänge entsprechender Länge aufgeteilt und im Folgeabstand zueinander
vergrößert und stückweise übereinandergeschichtet
werden.

10.) Verfahren nach einem der Ansprüche 1 bis 7, dadurch
gekennzeichnet, daß die einzelnen mit Füllschichtauftrag zu versehenden Stränge der Füllschichtbeschichtung unzerteilt zugeführt und nach dieser
zusammen mit einem etwaigen nicht mit Füllschichtauftrag versehenen Strang bandförmig kontinuierlich übereinandergeschichtet werden und daß der so
gebildete Mehrlagenstrang danach in einzelne blockförmige Stücke von der gewünschten Blocklänge entsprechender Länge aufgeteilt wird.

11.) Verfahren nach Anspruch 8 oder 9, dadurch gekennzeichnet, daß zur Bildung von Mehrlagenblöcken ohne
Füllschichtbeschichtung ihrer Decklage jeder Stapel
aus übereinandergeschichteten Strangstücken auf
Dickenmaß kalibriert wird.

12.) Verfahren nach Anspruch 11, dadurch gekennzeichnet,
daß die Stapel aus übereinandergeschichteten Strangstücken als Folge kontinuierlich aneinanderstoßender
Stapel auf Dickenmaß kalibriert werden.

13.) Verfahren nach Anspruch 10, dadurch gekennzeichnet,
daß zur Bildung von Mehrlagenblöcken ohne Füllschichtbeschichtung ihrer Decklage der Mehrlagenstrang vor
seiner Zerteilung in einzelne blockförmige Stücke
auf Dickenmaß kalibriert wird.

14.) Verfahren nach einem der Ansprüche 11 bis 13, dadurch
gekennzeichnet, daß zur Bildung von Mehrlagenblöcken
mit Füllschichtbeschichtung ihrer Decklage nach der
Kalibrierung auf Dickenmaß die einzelnen Stapel aus
übereinandergeschichteten Strangstücken als Folge
kontinuierlich aneinanderstoßender Stapel dieser Art
oder der unzerteilte Mehrlagenstrang einer nachfolgenden Füllschichtbeschichtung zugeführt werden.

15.) Verfahren nach einem der vorhergehenden Ansprüche, dadurch gekennzeichnet, daß das mit Füllschichtauftrag versehene Strangmaterial vor seiner Zerteilung in einzelne ein- oder mehrlagige Strangstücke bzw. blockförmige Stücke gekühlt wird.

16.) Verfahren nach einem der vorhergehenden Ansprüche, dadurch gekennzeichnet, daß nach der Blockbildung das mehrlagige Strangmaterial vor seiner Zerteilung in einzelne Blockstücke oder die einzelnen bereits vorhandenen Mehrlagenblöcke in einzelne Streifen längszerteilt werden.

17.) Verfahren nach einem der vorhergehenden Ansprüche, dadurch gekennzeichnet, daß zur Bildung von Mehrlagenblöcken mit streusel- oder krümelförmigem Belag zumindest eines Teils ihrer Außenoberfläche, vorzugsweise ihrer oberen Deckfläche, mit beispielsweise Nußstücken, Kokosraspeln oder dergleichen bei Vorhandensein eines Füllschichtauftrages auf der obersten Lage deren Füllschichtauftrag mit der Bestreuselung bzw. Bekrümelung versehen und bei Fehlen eines solchen Füllschichtauftrages auf der obersten Lage auf deren Außenseite durch Tauchen oder Besprühen eine Haftmittelschicht und danach die Bestreuselung bzw. Bekrümelung aufgebracht wird.

18.) Verfahren nach Anspruch 17, dadurch gekennzeichnet, daß die Bestreuselung bzw. Bekrümelung auf die Oberseite des als Decklage bestimmten Strangmaterials vor der Blockbildung aufgebracht wird.

19.) Verfahren nach Anspruch 17, dadurch gekennzeichnet, daß die Bestreuselung bzw. Bekrümelung nach der Blockbildung auf die Blockoberfläche bzw. deren hierfür vorgesehenen Teilbereich aufgebracht wird.

20.) Verfahren nach einem der vorhergehenden Ansprüche für die Herstellung von mit Außenumkleidung durch eine Hüllschicht versehenen blockförmigen Nahrungsmittelprodukten, dadurch gekennzeichnet, daß die gebildeten mehrlagigen Blöcke nach Fertigstellung ihrer geometrischen Außenkontur durch Tauchen oder Besprühen mit der Hüllschicht versehen und erforderlichenfalls anschließend gekühlt werden.

21.) Vorrichtung zur Herstellung von blockförmigen Nahrungsmittelprodukten aus mindestens zwei Lagen aus extrudierter und anschließend expandierter pflanzlicher Stärke mit zwischen- und/oder aufliegendem Füllschichtauftrag und/oder mit Außenumkleidung durch eine Hüllschicht vorzugsweise aus Schokolade, Nougat oder dergleichen, insbesondere zur Durchführung des Verfahrens nach einem der vorhergehenden Ansprüche, gekennzeichnet durch eine den Extrusionsteig (20) für alle Blocklagen gleichzeitig durch denselben Extruderauslaß (14) kontinuierlich ausfördernde Extrusionseinrichtung (4) mit dieser nachgeschaltetem Expansionsraum (15 bzw. 22 bzw. 22a bis 22c) und der Extrusionseinrichtung (4) oder dem Expansionsraum (15 bzw. 22 bzw. 22a bis 22c) zugeordneter Einrichtung (16a bzw. 16b bzw. 19) zur Aufteilung des Extrusionsteiges (20) in eine der gewünschten Lagenzahl entsprechende Zahl von kontinuierlichen bandförmigen Strängen (20a bis 20d) und durch eine der Zahl der mit Füllschichtauftrag zu versehenden Lagen entsprechende Vielzahl von dem Expansionsraum (15 bzw. 22 bzw. 22a bis 22c) nachgeschalteten Füllschichtauftrageinrichtungen (7a bis 7c) sowie durch eine Schichteinrichtung (21) für die Übereinanderschichtung der einzelnen Blocklagen.

22.) Vorrichtung nach Anspruch 21, dadurch gekennzeichnet, daß die Extrusionseinrichtung (4) eine Extrusionsdüse (14, 19) mit mehreren etwa rechteckförmigen Extrusionsöffnungen (19) von der gewünschten Querschnittsform der bandförmigen Stränge (20a bis 20d) ähnlicher Form und der Expansionsraum (15 bzw. 22 bzw. 22a bis 22c) eine der Zahl der Stränge (20a bis 20d) entsprechende Zahl von Expansionskammern (22 bzw. 22a, 22b, 22c) aufweist, in denen jeder Extrusionsstrang (20a bzw. 20b bzw. 20c bzw. 20d) unabhängig vom anderen expandierbar ist, und daß eine Verzweigungsfördereinrichtung (6a bis 6d) vorgesehen ist, mittels derer die Extrusionsstränge (20a bis 20d) nach ihrer Expansion mit sich etwa fächerförmig vergrößerndem Abstand auseinanderleitbar sind.

23.) Vorrichtung nach Anspruch 22, dadurch gekennzeichnet, daß die Extrusionsdüse (14, 19) der Extrusionseinrichtung (4) ausgangsseitig durch eine Lochplatte (17) mit einer der gewünschten Strangzahl entsprechenden Zahl von schlitzförmigen Austrittsöffnungen (19) für den Extrusionsteig (20) mit jeweils etwa rechteckförmiger Querschnittskontur verschlossen ist.

24.) Vorrichtung nach Anspruch 21, dadurch gekennzeichnet, daß die Extrusionseinrichtung (4) eine Extrusionsdüse (14) mit einer etwa rechteckförmigen Extrusionsöffnung (18) von der Summe der gewünschten Querschnittsformen der bandförmigen Stränge (20a, 20b bzw. 20a bis 20c) ähnlicher Form aufweist und daß dieser Extrusionsöffnung (18) eine Einrichtung (16a bzw. 16b) zur Aufteilung des Extrusionsstranges in eine der gewünschten Lagenzahl entsprechende Strangzahl nachgeschaltet ist.

25.) Vorrichtung nach Anspruch 24, dadurch gekennzeichnet, daß der Extrusionsdüse (14, 18) eine Expansionskammer (22 bzw. 22a, 22b, 22c) für die Expansion des aus dieser extrudierten bandförmigen Stranges als Ganzes nachgeschaltet ist und daß eine Verzweigungsfördereinrichtung (6a bis 6c) vorgesehen ist, mittels derer die durch die Aufteilung dieses als Ganzes expandierten bandförmigen Stranges durch die Aufteilungseinrich- tung (16a bzw. 16b) gewonnenen Teilstränge (20a, 20b bzw. 20a, 20b, 20c) mit sich etwa fächerförmig vergrößerndem Abstand auseinanderleitbar sind.

26.) Vorrichtung nach Anspruch 24, dadurch gekennzeichnet, daß der Extrusionsdüse (14, 18) eine Einrichtung (16a bzw. 16b) zur Aufteilung des Extrusionsstranges in eine der gewünschten Lagenzahl entsprechende Strangzahl sowie eine dieser Strangzahl entsprechende Zahl von Expansionskammern (22 bzw. 22a, 22b, 22c) nachgeschaltet ist, in denen jeder Teilstrang (20a bzw. 20b bzw. 20c) unabhängig vom anderen expandierbar ist, und daß eine Verzweigungsfördereinrichtung (6a bis 6c) vorgesehen ist, mittels derer die expandierten Teilstränge (20a, 20b bzw. 20a, 20b, 20c) mit sich etwa fächerförmig vergrößerndem Abstand auseinanderleitbar sind.

27.) Vorrichtung nach Anspruch 26, dadurch gekennzeichnet, daß die Extrusionsdüse (14, 18) der Extrusionseinrichtung (4) durch ein Übergangsstück (25) mit den einzelnen Expansionskammern (22, bzw. 22a, 22b, 22c) verbunden ist, in welchem die Aufteilungseinrichtung (16a bzw. 16b) angeordnet ist.

28.) Vorrichtung nach Anspruch 26, dadurch gekennzeichnet, daß die einzelnen Expansionskammern (22 bzw. 22a bzw. 22b bzw. 22c) mit der Extrusionsdüse (14, 18) der Extrusionseinrichtung (4) unmittelbar verbunden sind und daß
die Aufteilungseinrichtung (16a bzw. 16b) durch
ein allen Expansionskammern (22 bzw. 22a bis 22c)·
gemeinsames Einlaufmundstück (25) gebildet ist.

29.) Vorrichtung nach Anspruch 27 oder 28, dadurch gekennzeichnet, daß die Aufteilungseinrichtung (16a bzw. 16b)
messerklingen- oder drahtartige Schneidelemente aufweist.

30.) Vorrichtung nach Anspruch 29, dadurch gekennzeichnet,
daß die Schneidelemente feststehend im Vorschubweg des
Extrusionsstranges angeordnet sind.

31.) Vorrichtung nach einem der Ansprüche 21 bis 30, gekennzeichnet durch eine Einrichtung (22) zur formmäßigen
Führung des Extrusionsstranges bzw. seiner Teilstränge
(20a bzw. 20b bzw. 20c) währenddessen bzw. deren Expansion.

32.) Vorrichtung nach Anspruch 31, dadurch gekennzeichnet,
daß die Expansionsführungseinrichtung (22) durch eine
Lochplatte (26 bzw. 26, 27) mit der Zahl der Expansionskammern (22a bis 22c) entsprechender Zahl von mit der
bzw. den Extrusionsdüse(n) (14, 18) kommunizierenden
Einlauföffnungen (28) gebildet ist, deren lichte Kontur in Expansionsrichtung (A) sich erweiternd entsprechend der gewünschten Querschnittsform des jeweiligen
Expansionsstranges (20a bzw. 20b bzw. 20c) ausgebildet
ist.

33.) Vorrichtung nach einem der Ansprüche 21 bis 32, gekennzeichnet durch eine der Expansionseinrichtung (5) nachgeschaltete Rösteinrichtung (13) für die einzelnen Expansionsstränge (20a bzw. 20b bzw. 20c), in der diese

0024716

in kontinuierlichem Durchlauf auf gewünschte Endrösche bzw. Krossheit bringbar sind.

34.) Vorrichtung nach Anspruch 33, dadurch gekennzeichnet,
daß eine mit Heißgas und/oder Hochfrequenz und/oder
Infrarotstrahlung arbeitende Rösteinrichtung (13) vorgesehen ist.

35.) Vorrichtung nach einem der Ansprüche 21 bis 34, dadurch
gekennzeichnet, daß jedem Förderweg (6a, 26a, 9a bzw.
6b, 26b, 9b bzw. 6c, 26c, 9c) der einzelnen Expansionsstränge (20a bzw. 20b bzw. 20c) eine Querschneideinrichtung (12a bzw. 12b bzw. 12c) zugeordnet ist, mittels
derer dieser Strang (20a bzw. 20b bzw. 20c) in etwa
plattenförmige Stücke von der gewünschten Blocklänge
entsprechender Länge aufteilbar ist, und daß jeder solchen Querschneideinrichtung (12a bzw. 12b bzw. 12c) eine Fördereinrichtung (26a bzw. 26b bzw. 26c) nachgeschaltet ist, mittels derer diese etwa plattenförmigen
Stücke der mit Füllschichtauftrag zu versehenden Stränge (20a bzw. 20b bzw. 20c) in kontinuierlich aneinanderstoßender Folge einer zugeordneten Füllschichtauftragseinrichtung (7a bzw. 7b bzw. 7c) zuführbar sind, welcher jeweils ein Vereinzelungsförderer (9a bzw. 9b bzw.
9c) nachgeschaltet ist, mittels dessen die mit Füllschichtauftrag versehenen Stücke vereinzelt einer
Schichteinrichtung (21) zuführbar sind, in welcher sie
in gewünschter Folge übereinanderschichtbar und mit
einem entsprechenden Stück eines etwaigen nicht mit
Füllschichtauftrag versehenen Stranges abdeckbar sind.

36.) Vorrichtung nach einem der Ansprüche 21 bis 34, dadurch
gekennzeichnet, daß jedem Förderweg (6a, 26a, 9a bzw.
6b, 26b, 9b bzw. 6c, 26c, 9c) der einzelnen Expansionsstränge (20a bzw. 20b bzw. 20c) eine Füllschichtauftragseinrichtung (7a bzw. 7b bzw. 7c) zugeordnet ist, mittels welcher auf den betreffenden Expansionsstrang (20a
bzw. 20b bzw. 20c) währenddessen kontinuierlichen
Durchlaufs der gewünschte Füllschichtauftrag aufbringbar ist, und daß dieser Füllschichtauftragseinrichtung (7a bzw. 7b bzw. 7c) jeweils nachgeschaltet ebenso wie an beliebiger Stelle des Förderweges eines etwaigen nicht mit Füllschichtauftrag versehenen Stranges jeweils eine Querschneideinrichtung (12a' bzw. 12b' bzw. 12c'), mittels derer der jeweilige Strang (20a bzw. 20b bzw. 20c) in
etwa plattenförmige Stücke von der gewünschten Blocklänge entsprechender Länge aufteilbar ist, und ein
Vereinzelungsförderer (9a bzw. 9b bzw. 9c) vorgesehen
ist, mittels dessen die mit Füllschichtauftrag versehenen Stücke vereinzelt einer Schichteinrichtung (21)
zuführbar sind, in welcher sie in gewünschter Folge
übereinanderschichtbar und mit einem entsprechenden
Stück eines etwaigen nicht mit Füllschichtauftrag versehenen Stranges abdeckbar sind.

37.)  Vorrichtung nach einem der Ansprüche 21 bis 34, dadurch
      gekennzeichnet, daß jedem Förderweg (6a, 26a, 9a bzw.
      6b, 26b, 9b bzw. 6c, 26c, 9c) der einzelnen Expansionsstränge (20a bzw. 20b bzw. 20c) eine Füllschichtauftrags-
      einrichtung (7a bzw. 7b bzw. 7c) zugeordnet ist, mittels
      welcher auf den betreffenden Expansionsstrang (20a bzw.
      20b bzw. 20c) währenddessen kontinuierlichen Durchlaufs
      der gewünschte Füllschichtauftrag aufbringbar ist, und
      daß dieser Füllschichtauftragseinrichtung (7a bzw. 7b
      bzw. 7c) jeweils nachgeschaltet eine Fördereinrichtung
      (9a bzw. 9b bzw. 9c) vorgesehen ist, mittels derer die-
      ser mit Füllschichtauftrag versehene Strang (20a bzw.
      20b bzw. 20c) einer Schichteinrichtung (21) zuführbar
      ist, mittels welcher die einzelnen in gleicher Weise
      zugeführten mit Füllschichtauftrag versehenen Stränge
      (20a, 20b, 20c) bandförmig kontinuierlich übereinander- schichtbar und mit einem etwaigen gleichfalls als
kontinuierliches Band zugeführten nicht mit Füllschichtauftrag versehenen Strang ebenfalls bandförmig kontinuierlich abdeckbar sind, und daß dieser Schichteinrichtung (21) eine Querschneideinrichtung (12) nachgeschaltet ist, mittels welcher der
in der Schichteinrichtung (21) gebildete Mehrlagenstrang in einzelne blockförmige Stücke von der gewünschten Blocklänge entsprechender Länge aufteilbar ist.

38.) Vorrichtung nach Anspruch 35 oder 36, dadurch gekennzeichnet, daß eine Kalibriereinrichtung (10) vorgesehen ist, mittels welcher zur Bildung von Mehrlagenblöcken ohne Füllschichtbeschichtung ihrer Decklage
jeder Stapel aus übereinandergeschichteten Strangstücken auf gleichbleibendes Dickenmaß bringbar ist.

39.) Vorrichtung nach Anspruch 38, dadurch gekennzeichnet,
daß der Kalibriereinrichtung (10) die Stapel aus übereinandergeschichteten Strangstücken als Folge kontinuierlich aneinanderstoßender Stapel zuführbar sind.

40.) Vorrichtung nach Anspruch 37, dadurch gekennzeichnet,
daß der Querschneideinrichtung (12) eine Kalibriereinrichtung (10) vorgeschaltet ist, mittels welcher zur
Bildung von Mehrlagenblöcken ohne Füllschichtbeschichtung ihrer Decklage der Mehrlagenstrang auf gleichbleibendes Dickenmaß bringbar ist.

41.) Vorrichtung nach einem der Ansprüche 38 bis 40, dadurch
gekennzeichnet, daß der Kalibriereinrichtung (10) eine
weitere Füllschichtauftragseinrichtung (7) nachgeschaltet ist, welcher zur Bildung von Mehrlagenblöcken mit
Füllschichtbeschichtung ihrer Decklage die einzelnen
Stapel aus übereinandergeschichteten Strangstücken als Folge kontinuierlich aneinanderstoßender Stapel
dieser Art oder der unzerteilte Mehrlagenstrang
zwecks nachfolgender Füllschichtbeschichtung der
Oberfläche ihrer Decklage zuführbar sind.

42.) Vorrichtung nach einem der Ansprüche 21 bis 41,
     dadurch gekennzeichnet, daß im Förderweg (6a, 26a,
     9a bzw. 6b, 26b, 9b bzw. 6c, 26c, 9c) des mit Füll-
     schichtauftrag versehenen Strangmaterials zur jewei-
     ligen Querschneideinrichtung (12 bzw. 12a, 12b, 12c
     bzw. 12a', 12b', 12c"), mittels welcher es in einzelne
     ein- oder mehrlagige Strangstücke bzw. blockförmige
     Stücke aufteilbar ist, jeweils eine Kühleinrichtung
     (11) angeordnet ist.

43.) Vorrichtung nach einem der Ansprüche 21 bis 42, dadurch
     gekennzeichnet, daß im Förderweg (6a, 26a, 9a bzw. 6b,
     26b, 9b bzw. 6c, 26c, 9c) des mehrlagigen Strangmaterials zur Querschneideinrichtung (12), mittels welcher
     es in einzelne Blockstücke aufteilbar ist, oder der einzelnen bereits vorhandenen Mehrlagenblöcke jeweils eine
     Längsschneideinrichtung (27) angeordnet ist, mittels
     welcher das mehrlagige Strangmaterial oder die Mehrlagenblöcke in einzelne Streifen längszerteilbar sind.

44.) Vorrichtung nach einem der Ansprüche 21 bis 43, dadurch
     gekennzeichnet, daß im Förderweg (6c, 26c, 9c) des als
     oberste mit Füllschichtauftrag versehene Lage vorgesehenen Strangmaterials (20c) in Form eines mit Füllschicht-
     auftrag versehenen kontinuierlichen bandförmigen Stran-
     ges oder einer Folge querzerteilter plattenförmiger
     Stücke desselben zur Bildung von Mehrlagenblöcken mit
     streusel- oder krümelförmigem Belag zumindest eines Teils
     ihrer Außenoberfläche, vorzugsweise ihrer oberen Deckfläche, mit beispielsweise Nußstücken, Kokosraspeln oder dergleichen eine Einrichtung (8) zur Aufbringung
von Streuseln oder Krümeln oder dergleichen auf
die freie mit Füllschichtauftrag versehene Oberfläche vorgesehen ist.

45.) Vorrichtung nach einem der Ansprüche 21 bis 43,
dadurch gekennzeichnet, daß im Förderweg (6c, 26c,
9c) des als oberste Blocklage vorgesehenen Strangmaterials (20c) in Form eines nicht mit Füllschichtauftrag versehenen kontinuierlichen bandförmigen
Stranges oder einer Folge querzerteilter plattenförmiger Stücke desselben oder des bereits gebildeten Mehrlagenblockmaterials in Form gleichfalls
eines kontinuierlichen bandförmigen Mehrlagenstranges oder einer Folge querzerteilter Mehrlagenblockstücke zur Bildung von Mehrlagenblöcken mit streusel-
oder krümelförmigem Belag zumindest eines Teils ihrer
Außenoberfläche, vorzugsweise ihrer oberen Deckfläche,
mit beispielsweise Nußstücken, Kokosraspeln oder dergleichen eine Tauch- oder Besprüheinrichtung zur Aufbringung einer Haftmittelschicht und dieser nachgeschaltet eine Einrichtung zur Aufbringung von Streuseln oder Krümeln oder dergleichen auf die mit der
Haftmittelschicht versehene(n) Oberfläche(n) vorgesehen ist.

46.) Vorrichtung nach Anspruch 44 oder 45, dadurch gekennzeichnet, daß die Einrichtung (8) zur Aufbringung von
Streuseln, Krümeln oder dergleichen und gegebenenfalls
die Einrichtung zur Aufbringung einer Haftmittelschicht
der Schichteinrichtung (21) vorgeschaltet sind.

47.) Vorrichtung nach Anspruch 44 oder 45, dadurch gekennzeichnet, daß die Einrichtung (8) zur Aufbringung von
Streuseln, Krümeln oder dergleichen und gegebenenfalls
die Einrichtung zur Aufbringung einer Haftmittelschicht der Schichteinrichtung (21) nachgeschaltet sind.

48.) Vorrichtung nach einem der Ansprüche 21 bis 47 zur Herstellung von mit Außenumkleidung durch eine Hüllschicht versehenen blockförmigen Nahrungsmittelprodukten, dadurch gekennzeichnet, daß im Förderweg der gebildeten mehrlagigen Blöcke nach Fertigstellung ihrer geometrischen Außenkontur eine Einrichtung (28) zur Aufbringung der Hüllschicht mittels Tauchens oder Besprühens und erforderlichen falls eine nachgeschaltete Kühleinrichtung vorgesehen ist.

Patentanwalt

FIG. 1a

FIG. 1b

0024716

7c  7b  8  26c  12c'  12b'  7a  9c  12a'  9b  9a  21  10

12a  26a

FIG. 1c

7    11    12    27    28

FIG. 1d

FIG.5

FIG. 2a

FIG. 2b

4
14
15
20b
16a
20a
18
20
17

A

17
18
16a

FIG. 3a

FIG 3b

4
14
25
22c
20c
16b
22b
20b
20a
18
22a
17
20

A

17
18
16b

FIG. 4

FIG 4b

20 4 14 19 15 19
20d
6d
20c
6c
6b
20b
20a
6a
17

17
19

**Europäisches Patentamt**

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - B - 2 744 483 (MULLER) <br> * Beispiel; Figur 2; Anspruch; Spalte 3, Zeilen 9-22 * <br><br> -- | 1-7,21 28 | A 21 C 11/16 <br> 3/02 <br> A 23 G 3/20 |
| | FR - A - 2 361 821 (P. FERRER & C.S P.A.) <br> * Figuren 5-7,3; Seite 9, Zeile 21 - Seite 15, Zeile 35 * <br><br> -- | 6-10, 14,34 37,45 48 | |
| | US - A - 3 670 665 (G.A. LEVI) <br> * Figuren 1-5; Ansprüche 1-15; Spalte 2, Zeile 54 - Spalte 3 Zeile 7 * <br><br> -- | 6-10, 14,17 21,29 35-37 45-48 | **RECHERCHIERTE SACHGEBIETE (Int. Cl.³)** <br> A 23 P 1/00 <br> A 23 L 1/18 <br> A 21 C 11/20 <br> 15/02 <br> 11/00 |
| | DE - A - 2 712 311 (C.G. SPAERE) <br> * Ansprüche 1,3-5 * <br><br> -- | 1,17-19 | 11/16 <br> 11/18 <br> A 21 C 3/04 <br> 9/06 <br> A 21 B 7/00 <br> A 23 G 3/20 <br> 1/20 |
| A | AU - A - 441 562 (NATIONAL BISCUIT COMP.) | | 9/28 |
| A | GB - A - 1 029 990 (G.O. GRAVES) | | |
| A | GB - A - 663 049 (MARS) | | **KATEGORIE DER GENANNTEN DOKUMENTE** |
| A | GB - A - 820 867 (SCRIBBANS-KEMP. LTD.) | | X: von besonderer Bedeutung <br> A: technologischer Hintergrund <br> O: nichtschriftliche Offenbarung |
| A | US - A - 1 542 710 (W.B. LASKEY) | | P: Zwischenliteratur <br> T: der Erfindung zugrunde liegende Theorien oder Grundsätze |
| A | DE - B - 1 115 565 (BAKER PERKINS LTD.) | | E: kollidierende Anmeldung <br> D: in der Anmeldung angeführtes Dokument |
| A | GB - A - 860 666 (ELDORADO ICE CREAM COMP.) | | L: aus andern Grunden angeführtes Dokument |
| | --- -- | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 17-11-1980 | GUYON |

EPA form 1503.1 06.78